# EUROPEAN PATENT APPLICATION

(11) **EP 2 056 517 A2**
(43) Date of publication of application: **06.05.2009**
(21) Application number: 08019103.4
(22) Date of filing: 31.10.2008
(51) Int. Cl.: H04L 9/00

(54) **Encryption apparatus, decryption apparatus and cryptography system**

(30) Priority: 31.10.2007 JP 2007283765; 03.09.2008 JP 2008225892
(71) Applicant: Hitachi Ltd., Chiyoda-ku Tokyo 100-8280 (JP)
(72) Inventor: Hatano, Yasou, Tokyo 100-8220 (JP); Miyazaki, Kunihiko, Tokyo 100-8220 (JP); Matsumoto, Kenji, Tokyo 100-8220 (JP); Shimizu, Yoji, Tokyo 100-8220 (JP)
(74) Representative: Strehl Schübel-Hopf & Partner

(57) **Abstract**

Provided is a technology with which an electronic document including a plurality of elements such as texts and images may be partially encrypted and decrypted. An encryption-processing control unit receives a selection of electronic data included in an electronic document and a selection of an encryption key for encrypting the electronic data from among encryption keys stored in a storing unit. The encryption-processing control unit generates encrypted area data including partially encrypted data obtained by encrypting the selected electronic data with the selected encryption key, positional information for specifying a position of the selected electronic data in the electronic document, and decryption information including information that may specify a decryption key with which the partially encrypted data may be decrypted, and adds the encrypted area data to the electronic document.

## Description

### INCORPORATION BY REFERENCE

This application claims priority based on Japanese patent applications, No. 2007-283765 filed on October 31, 2007 and No. 2008-225892 filed on September 3, 2008, the entire contents of which are incorporated herein by reference.

### Background of the Invention

The present invention relates to a technology for encrypting an electronic document and decrypting the encrypted electronic document.

In recent years, due to development of the information communication technology, a large number of documents are formed as electronic data. The document formed as the electronic data (electronic document) may include information (confidential information such as personal information) that shouldbe restricted frombeing disclosed to users who view the document.

As means for preventing leakage of confidential information, there is known a method of encrypting the electronic document having the confidential information, thereby allowing only users who may decrypt the electronic document to view the confidential information.

In the technology disclosed in Japanese Patent Laid-open Publication No. 2007-37200, it is possible to, by encrypting a part of image data, partially disclose or not disclose the image data to users who view the part of image.

### Summary of the Invention

The technology disclosed in Japanese Patent Laid-open Publication No. 2007-37200 is a technology for partially encrypting image data of JPEG, bitmaps, and the like using spatial information such as coordinates in the image data. Therefore, when a target electronic document has not only image data but also a plurality of elements including a text document and the like, an area to be encrypted or decrypted may not be specified.

It is an object of the present invention to provide a technology with which an electronic document including a plurality of elements such as texts and images are partially encrypt and decrypt.

In order to solve the above-mentioned problem, according to the present invention, when selection of electronic data included in an electronic document is received and an instruction for encrypting the selected electronic data is received, encrypted data obtained by encrypting the selected electronic data, positional information for specifying a position of the selected electronic data in the electronic document, and information that specifies a decryption key with which the encrypted data is decrypted are generated and managed.

For example, according to the present invention, an encryption apparatus which encrypts an electronic document includes: a storing unit which stores at least one piece of management information for specifying a disclosee and cryptography information associated with the disclose which is a public key of a public key cryptography technology or a common key of a common key cryptography technology; and a control unit. The control unit performs: first selection processing of receiving a selection of electronic data included in the electronic document; second selection processing of receiving, for each of the selected electronic data, at least one selection of the disclosee; and processing of generating, using the cryptography information corresponding to the disclosee selected in the second selection processing, encrypted data obtained by encrypting the electronic data selected in the first selection processing, positional information for specifying a position of the electronic data selected in the first selection processing in the electronic document, and decryption information that specifies information used in decrypting the encrypted data.

As described above, according to the present invention, it is possible to partially encrypt and decrypt an electronic document including a plurality of elements such as texts and images.

These and other benefits are described throughout the present specification. A further understanding of the nature and advantages of the invention may be realized by reference to the remaining portions of the specification and the attached drawings.

### Brief Description of the Drawings

In the accompanying drawings:
FIG. 1 is a schematic diagram of a cryptography system;
FIG. 2 is a schematic diagram of a key managing apparatus;
FIG. 3 is a schematic diagram of a key management table;
FIG. 4 is a schematic diagram of a computer;
FIG. 5 is a schematic diagram of an encryption apparatus;
FIG. 6 is a schematic diagram of a key management table;
FIG. 7 is a schematic diagram of a decryption apparatus;
FIG. 8 is a schematic diagram of a key management table;
FIG. 9 is a sequence chart of a data flow of an electronic document in the cryptography system;
FIG. 10 is a flowchart of processing of creating an encrypted document in the encryption apparatus;
FIG. 11 is a schematic diagram of an encrypted electronic document;
FIG. 12 is a schematic diagram of a specific example of encrypted area data;
FIG. 13 is a flowchart of encryption-target-area setting processing;
FIG. 14 is a flowchart of processing of decrypting an encrypted electronic document;
FIG. 15 is a flowchart of processing of restoring an electronic document;
FIG. 16 is a schematic diagram of a display screen;
FIG. 17 is a flowchart of a modification of encryption processing;
FIG. 18 is a flowchart of a processing procedure in decrypting the encrypted electronic document;
FIG. 19 is a schematic diagram of a key managing apparatus;
FIG. 20 is a schematic diagram of a key management table;
FIG. 21 is a schematic diagram of a user key management table;
FIG. 22 is a schematic diagram of a correspondence table;
FIG. 23 is a schematic diagram of a key managing apparatus;
FIG. 24 is a schematic diagram of a password management table;
FIG. 25 is a schematic diagram of an encryption apparatus;
FIG. 26 is a schematic diagram of a password management table;
FIG. 27 is a schematic diagram of a decryption apparatus;
FIG. 28 is a schematic diagram of a password management table;
FIG. 29 is a flowchart of processing of creating an encrypted document;
FIG. 30 is a flowchart of encryption processing;
FIG. 31 is a flowchart of processing of decrypting an encrypted electronic document; and
FIG. 32 is a flowchart of a processing procedure in decrypting an encrypted electronic document.

### Detailed Description of the Embodiments

### First Embodiment

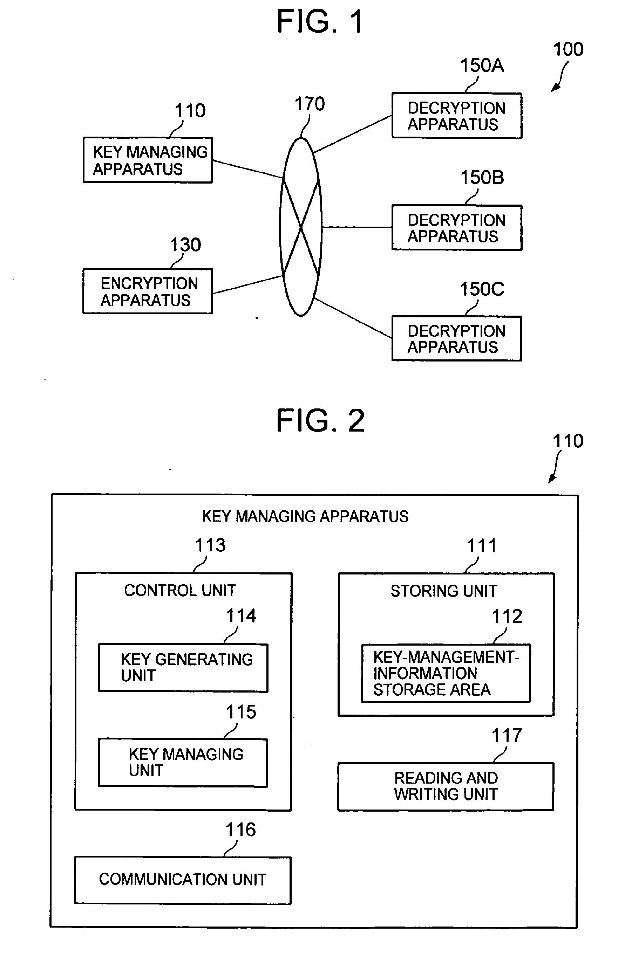

FIG. 1 is a schematic diagram of a cryptography system 100 according to a first embodiment of the present invention.

As illustrated in FIG. 1, the cryptography system 100 includes a key managing apparatus 110, an encryption apparatus 130, and decryption apparatuses 150A to 150C (when it is unnecessary to specifically distinguish the respective decryption apparatuses, the decryption apparatuses are collectively referred to as decryption apparatus 150). These apparatuses may mutually transmit and receive information via a network 170.

FIG. 2 is a schematic diagram of the key managing apparatus 110.

As illustrated in FIG. 2, the key managing apparatus 110 includes a storing unit 111, a control unit 113, a communication unit 116, and a reading and writing unit 117.

The storing unit 111 includes a key-management-information storage area 112.

Information for specifying a key for encrypting or decrypting electronic data is stored in the key-management-information storage area 112.

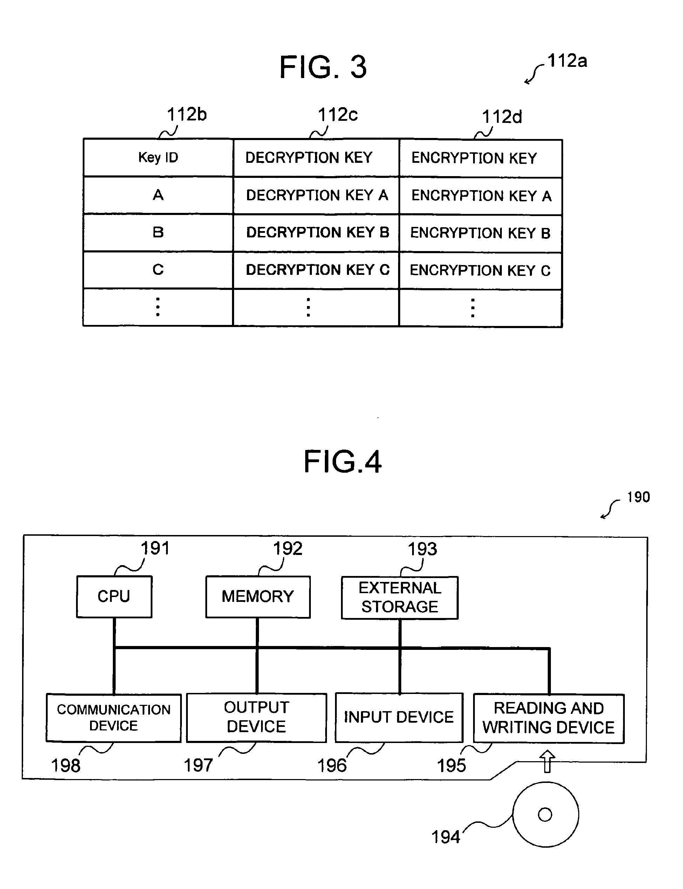

For example, a key management table 112a as illustrated in FIG. 3 (schematic diagram of key management table 112a) is stored in the key-management-information storage area 112.

Information for specifying an encryption key for encrypting electronic data and a decryption key for decrypting the electronic data encrypted with the encryption key is stored in the key management table 112a.

Specifically, the key management table 112a includes a key ID field 112b, a decryption key field 112c, and an encryption key field 112d.

Information for specifying key IDs as identification information for uniquely identifying pairs of decryption keys specified in the decryption key field 112c and encryption keys specified in the encryption key field 112d is stored in the key ID field 112b.

A key ID may give unique identification information to a key generated in key generation by a key generating unit 114 as described later. However, when a public key may be easily derived from a secret key, for example, when RSA cryptography is used, a hash value of the public key may be used as the key ID.

Decryption keys for decrypting electronic data encrypted by encryption keys specified in the encryption key field 112d described later or information for specifying storage locations of the decryption keys are stored in the decryption key field 112c. Encryption keys for encrypting electronic data or information for specifying storage locations of the encryption keys are stored in the encryption key field 112d.

In this embodiment, a public key cryptography system including a secret key and a public key is used. Electronic data encrypted by an encryption key which is a public key is decrypted by using a decryption key which is a secret key. This makes it difficult for a user who does not have a secret key forming a pair with the public key to view electronic data encrypted by the public key.

Referring back to FIG. 2, the control unit 113 includes the key generating unit 114 and a key managing unit 115.

The key generating unit 114 performs, according to an instruction from an operator of the key managing apparatus 110 or the decryption apparatus 150, processing of generating a pair of an encryption key and a decryption key, generating a key ID for uniquely identifying the pair of the encryption key and the decryption key, and storing the encryption key, the decryption key, and the key ID in corresponding fields of the key management table 112a.

The key managing unit 115 performs, according to an instruction from the operator of the key managing apparatus 110 or the decryption apparatus 150, processing of distributing the decryption key stored in the key management table 112a together with the key ID.

In this embodiment, the decryption key is a secret key of a public key cryptography system. Therefore, it is desirable to distribute the decryption key by storing the decryption key into a portable storage medium set by using the reading and writing unit 117 rather than transmitting the decrypt ion key via the communication unit 116 and the network 170. It is desirable in terms of security to store the secret key into a device , e. g. , IC card which has tamper resistance property to prevent the secret key from being easily copied.

The key managing unit 115 performs, according to an instruction from the operator of the key managing apparatus 110 or the encryption apparatus 130, processing of distributing the encryption key stored in the key management table 112a together with the key ID.

In this embodiment, the encryption key is a public key of a public key cryptography technology. Therefore, the encryption key is distributed by transmitting the encryption key via the network 170 (on the Web) by using the communication unit 11 6. However, the present invention is not limited thereto. It is also possible to distribute the encryption key by storing the encryption key into a portable storage medium in the same manner as the decryption key.

To make it possible to check whether or not the encryption key to be transmitted is managed by the key managing apparatus 110, it is desirable to issue a public key certificate to the encryption key.

The communication unit 116 is an interface for transmitting and receiving information via the network 170.

The reading and writing unit 117 is an interface for reading information from and writing information in a storage medium.

The key managing apparatus 110 described above may be realized by, for example, a general computer 190 illustrated in FIG. 4 (schematic diagram of computer 190) including: a central processing unit (CPU) 191; a memory 192; an external storage 193 such as a hard disk drive (HDD) ; a reading and writing device 195 which reads out information from and writes information on a storage medium 194 having portability such as a compact disk (CD), a digital versatile disk (DVD), or an integrated circuit (IC) card; an input device 196 such as a keyboard or a mouse; an output device 197 such as a display; and a communication device 198 such as a network interface card (NIC) for coupling to a communication network.

For example, the storing unit 111 may be realized by the CPU 191 using the memory 192 or the external storage 193. The control unit 113 may be realized by loading a predetermined program stored in the external storage 193 to the memory 192 and executing the program with the CPU 191. The communication unit 116 may be realized by the CPU 191 using the communication device 198. The reading and writing unit 117 may be realized by the CPU 191 using the reading and writing device 195.

The predetermined program may be downloaded to the external storage 193 from the storage medium 194 via the reading and writing device 195 or from a network via the communication device 198, loaded onto the memory 192 from the external storage 193, and executed by the CPU 191. Alternatively, the predetermined program may be directly loaded onto the memory 192 from the storage medium 194 via the reading and writing device 195 or from the network via the communication device 198 and executed by the CPU 191.

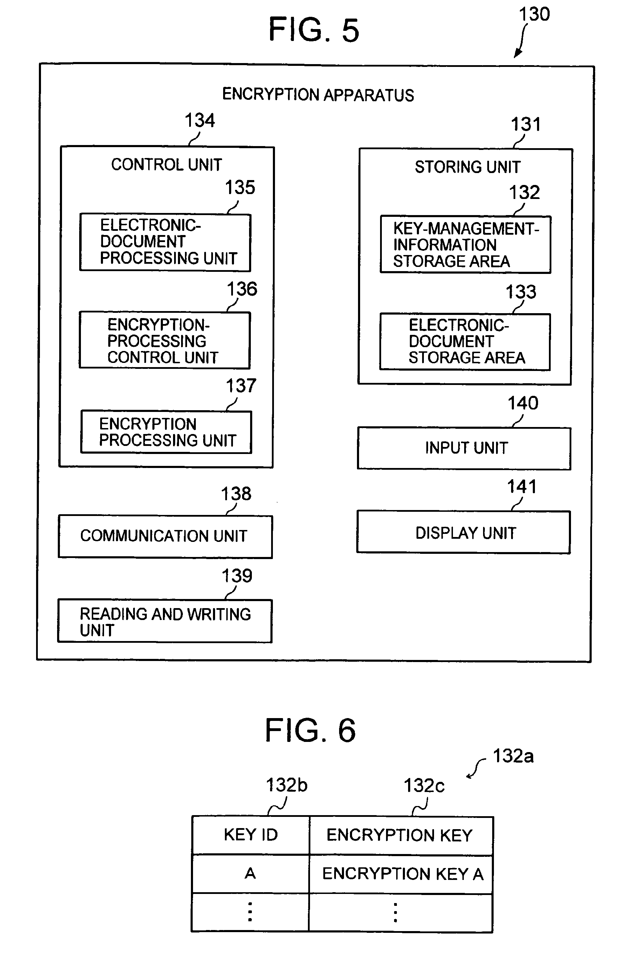

FIG. 5 is a schematic diagram of the encryption apparatus 130.

As illustrated in FIG. 5, the encryption apparatus 130 includes a storing unit 131, a control unit 134, a communication unit 138, a reading and writing unit 139, an input unit 140, and a display unit 141.

The storing unit 131 includes a key-management-information storage area 132 and an electronic-document storage area 133.

Information for specifying an encryption key for performing encryption is stored in the key-management-information storage area 132. As the encryption key, an encryption key distributed from the key managing apparatus 110 is stored in the key-management-information storage area 132.

For example, a key management table 132a as illustrated in FIG. 6 (schematic diagram of key management table 132a) is stored in the key-management-information storage area 132.

The key management table 132a includes a key ID field 132b and an encryption key field 132c.

Information for specifying a key ID serving as identification information for identifying a pair of an encryption key described later and a decryption key for decrypting electronic data encrypted by the encryption key is stored in the key ID field 132b. In this embodiment, as the key ID, a key ID distributed from the key managing apparatus 110 together with the encryption key is stored in the field. In this embodiment, it is possible to specify, by specifying the key ID, a disclosee of partially encrypted data described later.

Information for specifying an encryption key for encrypting electronic data is stored in the encryption key field 132c. In this embodiment, as the encryption key, an encryption key distributed from the key managing apparatus 110 is stored in the field. In this embodiment, the encryption key serves as cryptography information.

Referring back to FIG. 5, an electronic document to be encrypted by the encryption apparatus 130 is stored in the electronic-document storage area 133.

The control unit 134 includes an electronic-document processing unit 135, an encryption-processing control unit 136, and an encryption processing unit 137.

The electronic-document processing unit 135 displays an electronic document including electronic data on the display unit 141.

The encryption-processing control unit 136 receives, via the input unit 140, setting of an encryption target area and encryption key for performing encryption, and performs processing of setting the encryption target area and the encryption key in the electronic document displayed on the display unit 141 by the electronic-document processing unit 135.

The processing of setting the encryption target area is processing of specifying a page number and a position (coordinate) from an encryption target area of an electronic document designated via the input unit 140, deleting encryption target data, which is electronic data at the specified position, from the electronic document, and arranging another piece of electronic data (mask image in this case) determined in advance, from which the encryption target data may not be recognized, at the specified position.

The processing of setting the encryption key is processing of specifying, for each received encryption target area, an encryption key for encrypting electronic data included in the encryption target area from the encryption keys stored in the key-management-information storage area 132.

The encryption-processing control unit 136 outputs encryption target data and an encryption key, which are electronic data included in the received encryption target area, to the encryption processing unit 137.

The encryption-processing control unit 136 acquires encrypted area data from the encryption processing unit 137. Then, the encryption-processing control unit 136 adds the acquired encrypted area data to a position determined in advance of the electronic document, which is displayed on the display unit 141 by the electronic-document processing unit 135, to generate an encrypted electronic document.

An execution command for encryption is input via the input unit 140 in the electronic document displayed on the display unit 141 by the electronic-document processing unit 135. Then, the encryption processing unit 137 encrypts the encryption target data, which is output from the encryption-processing control unit 136, with the encryption key output from the encryption-processing control unit 136 to generate partially encrypted data.

The encryption processing unit 137 generates encrypted area data including the generated partially encrypted data, positional information (auxiliary data for restoration) for specifying a page number and a position in the electronic document of the partially encrypted data, and decryption information (header for encrypted data) for specifying a decryption key for decrypting each of the partially encrypted data, and outputs the encrypted area data to the encryption-processing control unit 136. Details of the encrypted area data are described later.

The communication unit 138 is an interface for transmitting and receiving information via the network 170.

The reading and writing unit 139 is an interface for reading information from and writing information on a storage medium.

The input unit 140 receives input of information from an operator of the encryption apparatus 130.

The display unit 141 displays the information in a set format.

The encryption apparatus 130 described above may be realized by, for example, the general computer 190 as illustrated in FIG. 4.

For example, the storing unit 131 may be realized by the CPU 191 using the memory 192 or the external storage 193. The control unit 134 may be realized by loading a predetermined program stored in the external storage 193 to the memory 192 and executing the program with the CPU 191. The communication unit 138 may be realized by the CPU 191 using the communication device 198. The reading and writing unit 139 may be realized by the CPU 191 using the reading and writing device 195. The input unit 140 may be realized by the CPU 191 using the input device 196. The display unit 141 may be realized by the CPU 191 using the output device 197.

The predetermined program may be downloaded to the external storage 193 from the storage medium 194 via the reading and writing device 195 or from a network via the communication device 198, loaded onto the memory 192 from the external storage 193, and executed by the CPU 191. Alternatively, the predetermined program may be directly loaded onto the memory 192 from the storage medium 194 via the reading and writing device 195 or from the network via the communication device 198 and executed by the CPU 191.

As the electronic-document processing unit 135, for example, general software such as Acrobat (registered trademark) of Adobe (registered trademark), Word (registered trademark), Excel (registered trademark), and PowerPoint (registered trademark) of Microsoft (registered trademark), or Writer and Calc of OpenOffice.org may be used or an original electronic document display program may be used.

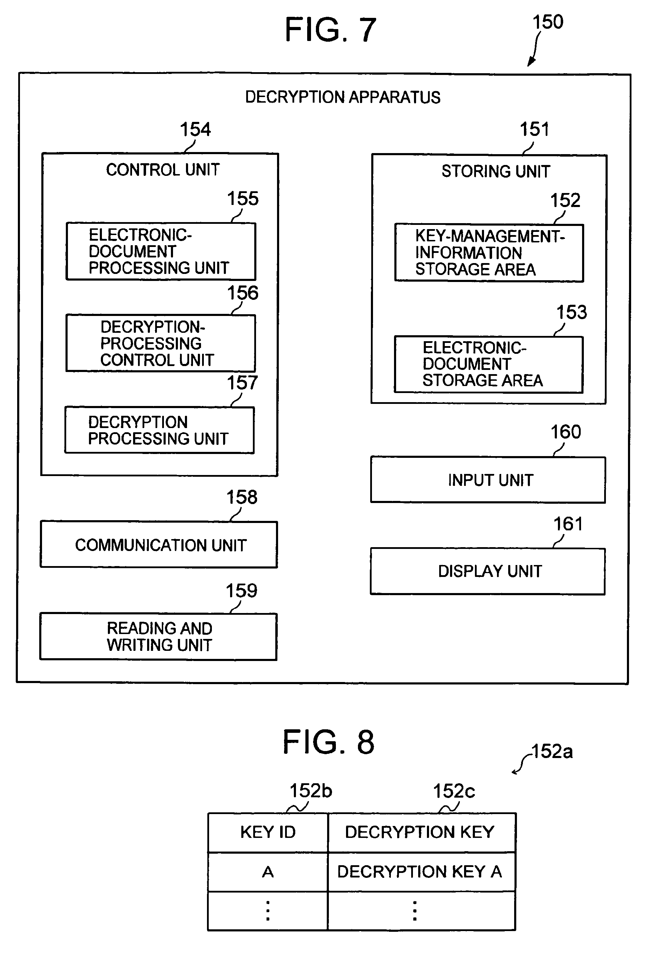

FIG. 7 is a schematic diagram of the decryption apparatus 150.

As illustrated in FIG. 7, the decryption apparatus 150 includes a storing unit 151, a control unit 154, a communication unit 158, a reading and writing unit 159, an input unit 160, and a display unit 161.

The storing unit 151 includes a key-management-information storage area 152 and an electronic-document storage area 153.

Information for specifying a decryption key for decrypting encrypted electronic data is stored in the key-management-information storage area 152. A decryption key distributed from the key managing apparatus 110 is stored in the key-management-information storage area 152.

For example, a key management table 152a as illustrated in FIG. 8 (schematic diagram of key management table 152a) is stored in the key-management-information storage area 152.

The key management table 152a includes a key ID field 152b and a decryption key field 152c.

Information for specifying a key ID serving as identification information for identifying a pair of an encryption key for encrypting electronic data and a decryption key for decrypting the electronic data encrypted by the encryption key is stored in the key ID field 152b.

In this embodiment, as the key ID, a key ID distributed from the key managing apparatus 110 together with the decryption key is stored in the key ID field 152b.

Information for specifying a decryption key for decrypting encrypted electronic data is stored in the decryption key field 152c. In this embodiment, as the decryption key, a decryption key distributed from the key managing apparatus 110 is stored in the decryption key field 152c.

Referring back to FIG. 7, an electronic document to be decrypted by the decryption apparatus 150 is stored in the electronic-document storage area 153.

The control unit 154 includes an electronic-document processing unit 155, a decryption-processing control unit 156, and a decryption processing unit 157.

The electronic-document processing unit 155 displays an electronic document including electronic data on the display unit 161.

The decryption-processing control unit 156 receives an instruction for decryption processing via the input unit 160 in the electronic document displayed by the electronic-document processing unit 155.

The decryption-processing control unit 156 receives the instruction for decryption processing. Then, the decryption-processing control unit 156 acquires encrypted area data included in the electronic document displayed by the electronic-document processing unit 155.

The decryption-processing control unit 156 specifies a decryption key from information (key ID in this case) for specifying the decryption key included in a header for encrypted data of the acquired encrypted area data, and acquires the specified decryption key from the key management table 152a stored in the key-management-information storage area 152.

The decryption-processing control unit 156 outputs the acquired decryption key and partially encrypted data included in the encrypted area data to the decryption processing unit 157.

The decryption-processing control unit 156 stores decrypted data decrypted by the decryption processing unit 157 at a position set in the electronic document to restore the electronic document.

The decryption processing unit 157 decrypts the partially encrypted data using the decryption key output from the decryption-processing control unit 156, and outputs the decrypted data to the decryption-processing control unit 156.

The communication unit 158 is an interface for transmitting and receiving information via the network 170.

The reading and writing unit 159 is an interface for reading information from and writing information on a storage medium.

The input unit 160 receives input of information from an operator of the decryption apparatus 150.

The display unit 161 displays the information in a set format.

The decryption apparatus 150 described above may be realized by, for example, the general computer 190 as illustrated in FIG. 4.

For example, the storing unit 151 may be realized by the CPU 191 using the memory 192 or the external storage 193. The control unit 154 may be realized by loading a predetermined program stored in the external storage 193 to the memory 192 and executing the program with the CPU 191. The communication unit 158 may be realized by the CPU 191 using the communication device 198. The reading and writing unit 159 may be realized by the CPU 191 using the reading and writing device 195. The input unit 160 may be realized by the CPU 191 using the input device 196. The display unit 161 may be realized by the CPU 191 using the output device 197.

The predetermined program may be downloaded to the external storage 193 from the storage medium 194 via the reading and writing device 195 or from a network via the communication device 198, loaded onto the memory 192 from the external storage 193, and executed by the CPU 191. Alternatively, the predetermined program may be directly loaded onto the memory 192 from the storage medium 194 via the reading and writing device 195 or from the network via the communication device 198 and executed by the CPU 191.

As the electronic-document processing unit 155, for example, general software such as Acrobat (registered trademark) of Adobe (registered trademark), Word (registered trademark), Excel (registered trademark), and PowerPoint (registered trademark) of Microsoft (registered trademark), or Writer and Calc of OpenOffice.org may be used or an original electronic document display program may be used.

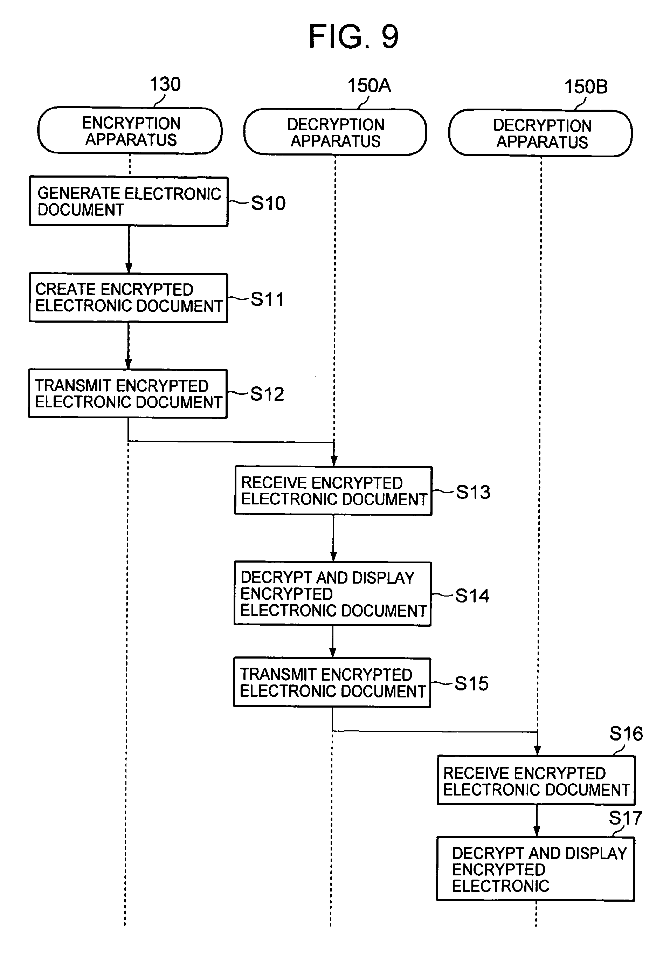

FIG. 9 is a sequence chart of a data flow of an electronic document in the cryptography system 100.

In the following description of the sequence chart, as an example, the decryption apparatus 150A and the decryption apparatus 150B are used. However, the present invention is not limited to such an example. It is also possible to use other decryption apparatuses (e.g., decryption apparatus 150C).

First, the encryption apparatus 130 generates an electronic document (S10) and creates an encrypted electronic document from the generated electronic document (S11). The encrypted electronic document is obtained by encrypting a part of the electronic document or the entire electronic document.

The encryption apparatus 130 transmits the encrypted electronic document created in Step S11 to the decryption apparatus 150A (S12).

The decryption apparatus 150A receives the encrypted electronic document from the encryption apparatus 130 (S13). The decryption apparatus 150A decrypts the encrypted electronic document and displays a decrypted electronic document (S14).

It is desirable in terms of security not to store the decrypted electronic document in the storing unit 151 in the decryption apparatus 150A. Even if the decrypted electronic document is stored, it is desirable to immediately delete the decrypted electronic document after display processing is finished. This is for the purpose of preventing information in a disclosed portion from leaking from the decrypted electronic document.

The decryption apparatus 150A transmits the encrypted electronic document received in Step S13 to the decryption apparatus 150B (S15).

The decryption apparatus 150B receives the encrypted electronic document from the decryption apparatus 150A (S16). The decryption apparatus 150B decrypts the encrypted electronic document and displays a decrypted electronic document (S17).

In the sequence illustrated in FIG. 9, the decryption apparatus 150A transmits the encrypted electronic document to the decryption apparatus 150B. However, the present invention is not limited thereto. For example, the encrypted electronic document may be transmitted from the encryption apparatus 130 to each of the decryption apparatus 150A and the decryption apparatus 150B. Alternatively, the electronic document may be stored in the electronic-document storage area 153 of the storing unit 151 of the decryption apparatus 150A to finish the processing.

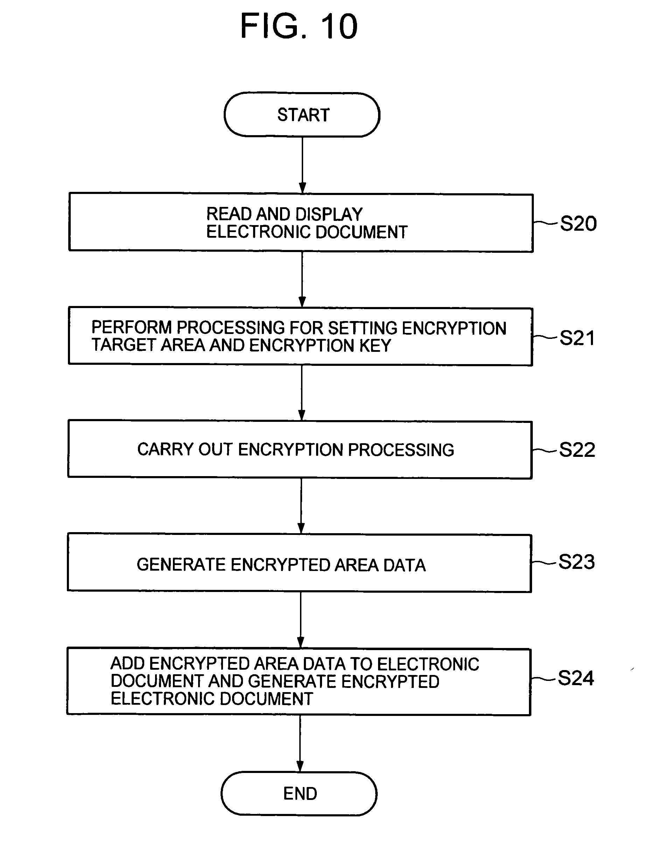

FIG. 10 is a flowchart of processing of creating an encrypted document in the encryption apparatus 130.

The electronic-document processing unit 135 of the encryption apparatus 130 reads an electronic document including electronic data such as an image or a text, and displays the electronic document on the display unit 141 (S20).

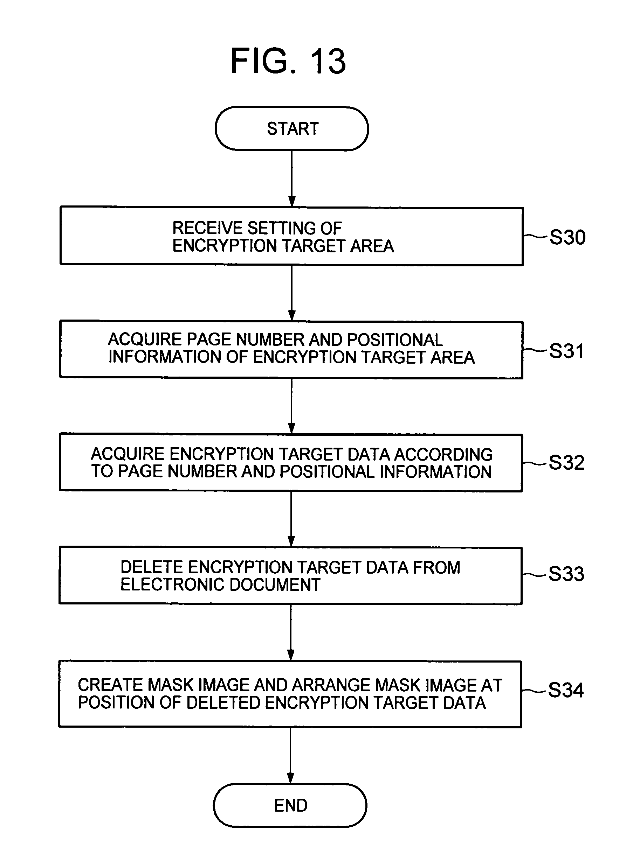

In the electronic document displayed on the display unit 141 by the electronic-document processing unit 135, the encryption-processing control unit 136 receives, via the input unit 140, setting of an encryption target area and an encryption key for performing encryption, and performs encryption-target-area setting processing and encryption-key setting processing (S21). The encryption-target-area setting processing is described in detail later with reference to FIG. 13.

In Step S21, the operator of the encryption apparatus 130 sets one or more encryption target areas in the electronic document via the input unit 140, and sets, for the respective set of encryption target areas, one or more encryption keys for encryption in order to determine users who may decrypt the encryption target areas.

The operator only has to set the encryption target areas via the input unit 140 such as a mouse or a keyboard using a selection tool provided by the electronic-document processing unit 135. The operator only has to set the encryption keys for the respective encryption target areas by, for example, designating the key ID stored in the key management table 132a stored in the key-management-information storage area 132 using a file dialog or the like.

The encryption-processing control unit 136 of the encryption apparatus 130 acquires encryption target data acquired in the encryption-target-area setting processing performed in Step S21, page numbers of the encryption target areas, and positional information of the encryption target areas, also acquires the encryption keys set in Step S21 from the key-management-information storage area 132, and outputs the encryption target data, the page numbers, the positional information, and the encryption keys to the encryption processing unit 137. The encryption processing unit 137 encrypts the output encryption target data using the encryption key (S22). The encryption processing unit 137 generates encrypted area data using the partially encrypted data (S23).

The encrypted area data includes the partially encrypted data, the page numbers and positional information of the encryption target areas, and decryption information for specifying a decryption key (disclosee) corresponding to the encryption keys.

The encryption-processing control unit 136 adds the encrypted area data generated in Step S23 to a position in the electronic document to generate an encrypted electronic document (S24).

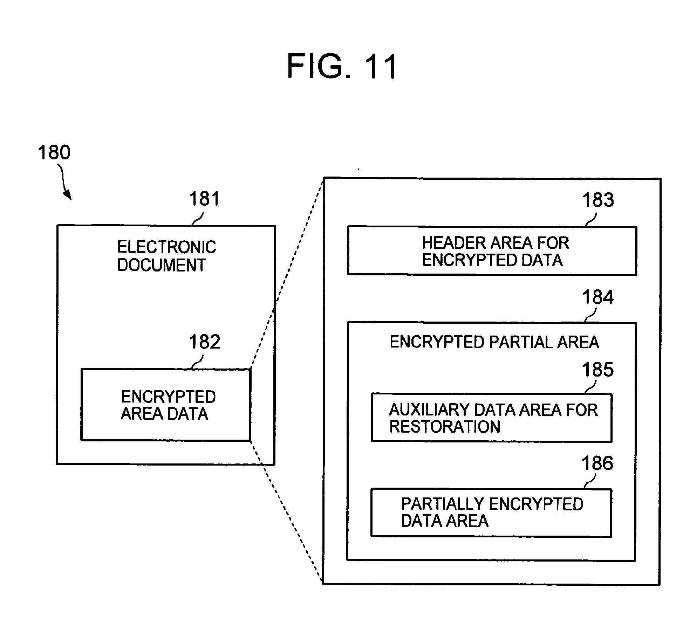

FIG. 11 is a schematic diagram of an encrypted electronic document 180 generated in Step S24 illustrated in FIG. 10.

As illustrated in FIG. 11, the encrypted electronic document 180 includes an electronic document 181 and encrypted area data 182.

The encrypted area data 182 includes a header area for encrypted data 183 and a partially encrypted area 184.

At least information for specifying a decryption key used for each partially encrypted data stored in the encrypted partial area 184 is stored in the header area for encrypted data 183.

For example, for each piece of information (e.g., key ID) for designating the decryption key, identification information that may identify partially encrypted data that may be decrypted by the decryption key is stored in the header area for encrypted data 183.

Besides, information for specifying an algorithm name and the like used for encryption is stored in the header area for encrypted data 183.

The partially encrypted area 184 includes an auxiliary data area for restoration 185 and a partially encrypted data area 186.

Information for specifying a position in an electronic document, which indicates a position where partially encrypted data in the partially encrypted data area 186 described later is stored in the electronic document before encrypted, is stored in the auxiliary data area for restoration 185. In this embodiment, as information for specifying the position, a page number in the electronic document and information for specifying a position (coordinate) on a page specified by the page number are stored in the auxiliary data area for restoration 185.

Partially encrypted data obtained by encrypting electronic data, which is included in an area instructed to be encrypted in the electronic document, is stored in the partially encrypted data area 186 in association with identification information that may uniquely identify the partially encrypted data.

A pair of the auxiliary data area for restoration 185 and the partially encrypted data area 186 is generated for each of areas of the electronic data set as the target of encryption. In other words, when there are a plurality of areas set as the target of encryption, the plurality of pairs of the auxiliary data area for restoration 185 and the partially encrypted data area 186, whose number of the same as the one of the areas set as the target of encryption are generated.

Note that, for example, in portable document format (PDF), OpenDocument format (ODF), and OpenXML, the encrypted area data 182 may be stored in an area for storing control information (meta-information) defined for each of the formats.

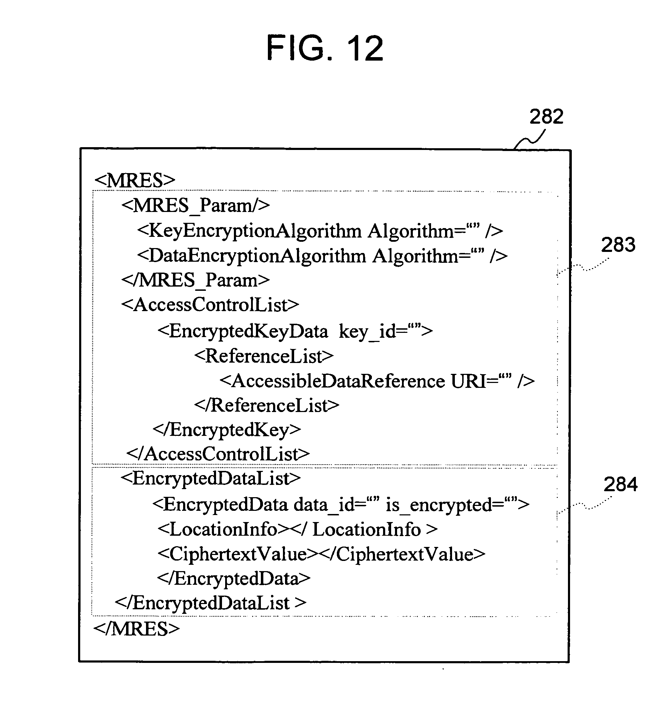

FIG. 12 is a schematic diagram of a specific example of encrypted area data. In FIG. 12, an example of a data representation method that represents the encrypted area data using XML is illustrated.

Encrypted area data 282 illustrated in FIG. 12 includes a header area for encrypted data 283 which corresponds to the header area for encrypted data 183 in FIG. 11 and an encrypted partial area 284 which corresponds to the encrypted partial area 184 in FIG. 11.

As illustrated in FIG. 12, the encrypted area data 282 includes an MRES element that identifies the area being as the encrypted area data.

The MRES element includes an MRES_Param element for storing a common parameter, an AccessControlList element for access control information and for storing encrypted key data,where the common parameter, access control information and encrypted key data are included in the header area for encrypted data 283. Further, the MRES element includes an EncryptedDataList element for storing auxiliary data for restoration and partially encrypted data, which are included in the encrypted partial area 284.

Information for indicating a parameter used in common in the encryption processing unit 137 in the encryption apparatus 130 and the decryption processing unit 157 in the decryption apparatus 150, for example, information for specifying algorithms of common key cryptography and public key cryptography used for encryption is described in the MRES_Param element.

Specifically, a KeyEncryptionAlgorithm element for designating an encryption algorithm of an encryption key and a DataEncryptionAlgorithm element for designating an encryption algorithm for encrypting partial data set as a target of encryption are described. An Algorithm attribute in each of the elements is an attribute for describing an identifier of the algorithm in use. For example, when AES-128 is used in a CBC mode, the Algorithm attribute only has to be described as "http://www.w3.org/2001/04/xmlenc#aes128-cbc"

The AccessControlList element includes an EncryptedKeyData element and an EncryptedKey element having a ReferenceList element.

The EncryptedKeyData element is an element for storing information for specifying an encryption key. A key ID that may specify a decryption key is described in an attribute value key_id.

The ReferenceList element is an element for storing access control information. A list of partially encrypted data that may be decrypted (list of IDs allocated to partially encrypted data) is described in the ReferenceList element. In this example in which XML is used, an attribute value Data_ID of an EncryptedData element for storing a set of an auxiliary data area for restoration and a partially encrypted data area in electronic document encrypted data is designated, whereby a list of partially encrypted data that may be decrypted by using the decryption key, which is specified by the EncryptedKeyData element, is described.

The EncryptedDataList element includes the EncryptedData element for storing a set of auxiliary data for restoration and partially encrypted data.

Information for designating a restoration position (page number and position (coordinate) of electronic document) of partially encrypted data corresponding to the LocationInfo element is described in a LocationInfo element of the EncryptedData element.

A character string obtained by encoding the partially encrypted data using BASE64 is described in a CiphertextValue element.

The example illustrated in FIG. 12 is an example of a data representation method that represents the encrypted area data 182. Element names and the like may be arbitrarily changed. An example of realization of the method is described above by using XML because data representation thereof is easy. However, as a data format of encrypted area data, a data format suitable for an encrypted electronic document actually used may be arbitrarily selected.

FIG. 13 is a flowchart of the encryption-target-area setting processing.

In the figure, the electronic-document processing unit 135 of the encryption apparatus 130 reads an electronic document including electronic data and displays the electronic document on the display unit 141.

First, the encryption-processing control unit 136 receives, via the input unit 140, designation of an area to be encrypted (S30).

The encryption-processing control unit 136 acquires a page number and coordinate information of the designated area (S31).

If the area designated in Step S30 is an entire object, the encryption-processing control unit 136 merely specifies the object set as the encryption target area from the page number and the coordinate information of the electronic document.

If the area designated in Step S30 is a part of a text rather than the entire object, in addition to the information for specifying the entire object, the encryption-processing control unit 136 merely specifies text information set as a target from information such as a byte position (e.g., from first byte to tenth byte) of the designated area in the object.

If the area designated in Step S30 is a part of image data of the object, in addition to the information for specifying the entire object, the encryption-processing control unit 136 searches through the object, and merely specifies an area of the image data on the object from an obtained display coordinate of the object and coordinate information of the area designated via the input unit 140.

The encryption-processing control unit 136 searches through electronic data in the electronic document corresponding to the designated area and acquires the corresponding electronic data as encryption target data (S32). The acquired encryption target data is stored in the storing unit 131 as, for example, an array in order designated in Step S30. The encryption processing unit 137 performs encryption in Step S22 illustrated in FIG. 10.

The encryption-processing control unit 136 deletes the encryption target data acquired in Step S32 from the electronic document (S33).

The encryption-processing control unit 136 generates a mask image and writes the mask image in the electronic document so that the mask image could be arranged on the display unit 141 which corresponds to the area designated in Step S30 (S34). The electronic-document processing unit 135 displays the electronic document, in which the mask image is arranged, on the display unit 141.

In Step S34, the encryption-processing control unit 136 generates an object including a black mask image and writes the object in the electronic document such that, to clearly indicate that the area designated in Step S30 is an area that a user may not view unless the user owns a decryption key, the area is displayed in black when the decryption processing unit 157 of the decryption apparatus 150 displays the electronic document on the display unit 161.

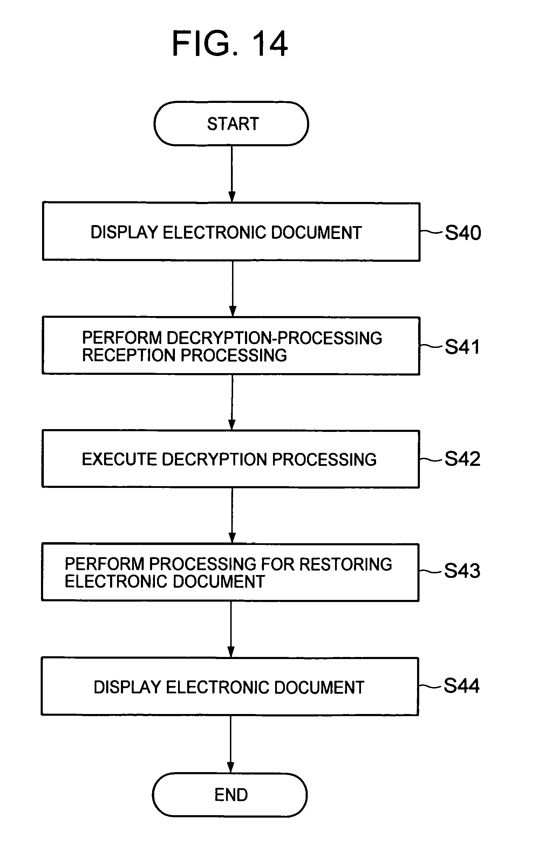

FIG. 14 is a flowchart of processing of decrypting an encrypted electronic document in the decryption apparatus 150.

The electronic-document processing unit 155 of the decryption apparatus 150 displays an electronic document, which is stored in the electronic-document storage area 153, on the display unit 161 (S40).

The decryption-processing control unit 156 detects whether or not encrypted area data is present in the electronic document and, if the encrypted area data is present, receives a command execution for the decryption processing (S41).

The decryption-processing control unit 156 may only detect whether or not the encrypted area data 182 is present. For example, if a data format such as the PDF is adopted, the decryption-processing control unit 156 may searches through all objects in a PDF file and judging whether or not there is an object having a format corresponding to the encrypted area data 182 in the object. When a data format such as the XML is adopted, the decryption-processing control unit 156 may detect whether or not the encrypted area data is present by judging whether or not an element corresponding to the encrypted area data 182 is present.

The reception of the decryption processing may be realized by, for example, preparing a button for decryption execution as a selection menu in a screen on which the electronic document is displayed (when the encrypted area data is not present, the button may only be set inactive to prevent the decryption processing from being executed).

The decryption-processing control unit 156 acquires necessary information from the encrypted area data 182 in the electronic document 180 and outputs the information to the decryption processing unit 157 together with a decryption key to be used. The decryption processing unit 157 executes the decryption processing (S42).

The decryption-processing control unit 156 acquires information for specifying a decryption key used for decryption (in this embodiment, key ID) from the header area for encrypted data 183 of the encrypted area data 182 and judges whether or not the information corresponding to the key ID is stored in the key ID field 152b of the key management table 152a stored in the key-management-information storage area 152. If the information is stored in the key ID field 152b, the decryption-processing control unit 156 acquires partially encrypted data stored in association with the stored key ID from the partially encrypted data area 186.

The decryption-processing control unit 156 acquires information for specifying a decryption key used for decryption (in this embodiment, key ID) from the header area for encrypted data 183 of the encrypted area data 182 and acquires a decryption key corresponding to the key ID from the key management table 152a stored in the key-management-information storage area 152.

The decryption-processing control unit 156 outputs the acquired partially encrypted data and the acquired decryption key to the decryption processing unit 157. The decryption processing unit 157 performs decryption.

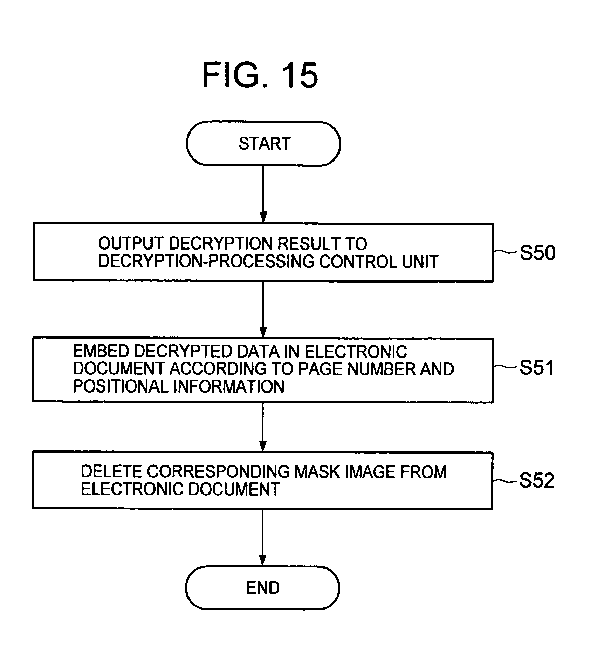

The decryption-processing control unit 156 fits decrypted data decrypted by the decryption processing unit 157 in the electronic document to thereby restore the electronic document (S43). The electronic-document processing unit 155 displays the restored electronic document on the display unit 161 (S44). Restoration processing performed in Step S43 is described in detail later with reference to FIG. 15.

If some decryption error occurs in the decryption processing unit 157, it is desirable to display a message concerning a decryption failure on the display unit 161.

FIG. 15 is a flowchart of processing of restoring an electronic document using decrypted partial data.

First, the decryption processing unit 157 outputs decrypted electronic data to the decryption-processing control unit 156 (S50).

The decryption-processing control unit 156 embeds the decrypted electronic data in the electronic document referring to page numbers and coordinate information in the electronic document of the decrypted electronic data from the auxiliary data for restoration included in the auxiliary data area for restoration 185 of the encrypted area data (S51).

If it is possible to designate an object by using an identifier of an object, in Step S51, the decryption-processing control unit 156 may designate the decrypted electronic data as an object to be restored in the electronic document using the object identifier as the auxiliary data for restoration.

The decryption-processing control unit 156 deletes a mask image corresponding to the electronic data, which is embedded in Step S51, from the electronic document (S52).

For the deletion of the mask image corresponding to the decrypted electronic data, for example, when the mask image is generated in Step S34 illustrated in FIG. 13, a page number and coordinate information (or identifier of object) of a mask image corresponding thereto are stored in the auxiliary data area for restoration 186 in advance. An object representing the corresponding mask image only has to be deleted on the basis of this information.

For the electronic document restored by the processing described above, for example, it is desirable to disable a storage function of the electronic-document processing unit 155 or prohibit copying from displayed electronic document. This is for the purpose of preventing information on decrypted partially encrypted data from being stored in the outside to cause information leakage.

The encrypted electronic document and the restored electronic document may be, for example, prohibited from being printed and edited.

Even when the storage of the restored electronic document is permitted, for example, it is desirable to delete all the partially encrypted data left in the encrypted area data in the electronic document (partially encrypted data which is not decrypted).

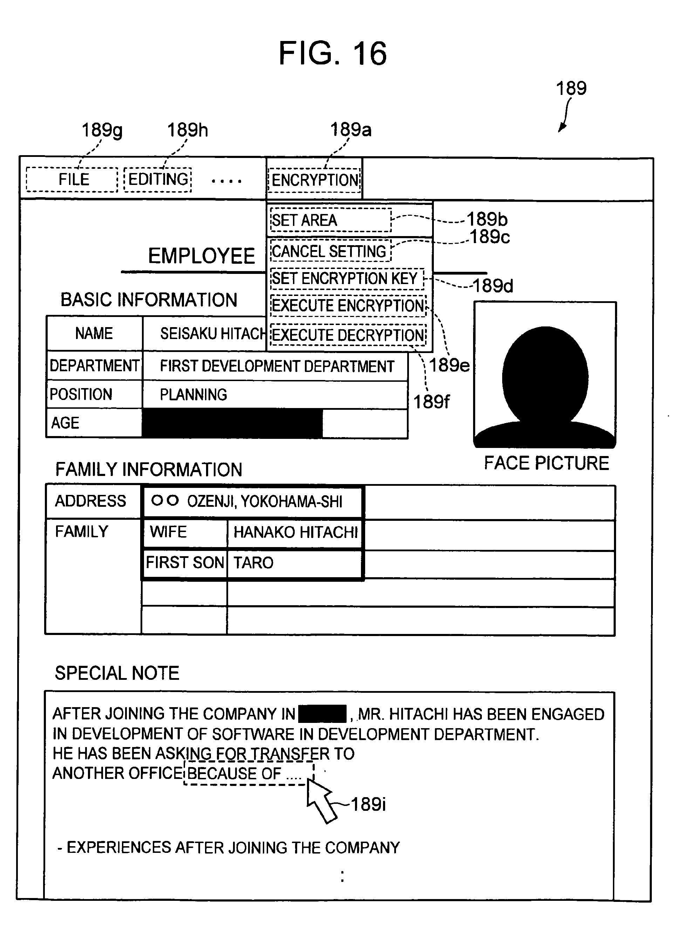

FIG. 16 is a schematic diagram of a display screen 189 displayed on the display units 141 and 161 of the encryption apparatus 130 and the decryption apparatus 150, respectively, when the electronic-document processing unit 135 and the encryption-processing control unit 136 of the encryption apparatus 130, and the electronic-document processing unit 155 and the decryption-processing control unit 156 of the decryption apparatus 150 apply processing to an electronic document.

An encryption menu designation area 189a for executing encryption area setting, encryption processing, and decryption processing is provided in the display screen 189.

The encryption menu designation area 189a includes an area setting sub-menu designation area 189b for setting an encryption area, a setting release sub-menu designation area 189c for releasing a selected encryption area, an encryption key setting sub-menu designation area 189d for setting an encryption key in the set encryption area, an encryption execution sub-menu designation area 189e for executing encryption processing, and a decryption execution sub-menu designation area 189f for executing decryption processing.

A file menu designation area 189g and an editing menu designation area 189h in FIG. 16 are areas for instructing execution of standard functions provided in advance in the electronic-document processing units 135 and 155 for performing reading, storage, copying, and the like of files. The realization of the functions via the encryption menu designation area 189a only has to be provided by plug-in or the like to the electronic-document processing units 135 and 155.

First, an operation example in performing encryption on the display screen 189 illustrated in FIG. 16 is described.

The operator of the encryption apparatus 130 reads an electronic document set as a target of encryption using the file menu designation area 189g.

The operator sets an encryption area using the input unit 140. Specifically, the operator selects, using a pointer 189i or the like, an area for performing encryption out from an area of the display screen 189 in which the electronic document is displayed The operator inputs an instruction for encrypting electronic data included in the selected area via the area setting sub-menu designation area 189b. By receiving such input of the instruction, the encryption-processing control unit 136 acquires the electronic data from the selected area, deletes the acquired electronic data from the electronic document, and embeds another piece of electronic data (mask image) different from the original electronic data in the deleted area.

After selecting at least one area to be encrypted as described above, the operator inputs, via the input unit 140, an execution command, in which the encryption key setting sub-menu designation area 189d of the encryption menu designation area 189a is designated, to thereby set an encryption key for encrypting the selected area. For the setting of the encryption key, for example, the operator can select the information for identifying the encryption key used for encryption (e.g., user name having encryption key) displayed on the display unit 141 by using a file dialog or the like.

By repeating the processing as described above, the operator of the encryption apparatus 130 may set a plurality of sets of encryption areas. Finally, the operator inputs an execution command by the encryption execution sub-menu designation area 189e, via the input unit 140. Consequently, electronic data corresponding to the selected area is encrypted, encrypted area data is generated and added to the electronic document, and an encrypted electronic document is generated.

When the execution command by the encryption execution sub-menu designation area, is input, an electronic document presently displayed on the display unit 141 may be overwritten and stored or the file dialog may be displayed to allow the operator to designate a storage destination of the encrypted electronic document.

In the example illustrated in FIG. 16, after a plurality of areas to be encrypted are selected, the plurality of areas are processed as one encryption setting area. In other words, one encryption setting area includes a plurality of partial areas. Even when one encryption setting area includes a plurality of partial areas in this way, auxiliary data for restoration associated with respective encryption setting areas could be managed as, for example, a multidimensional array on a program to illustrate correspondence with the respective partial areas included in the encryption setting area.

Specifically, when encryption is performed, encryption may be easily realized by connecting the partial areas included in the encryption setting area according to a format (e.g., XML) set in advance to process the partial areas as one piece of encryption target partial data and, at the decryption, making it possible to obtain the respective partial areas included in the encryption setting area from a decryption result by analyzing this format.

In the setting of the encryption area as described above, for example, to enhance visual recognition of a key which is used for an encryption of already set encryption area, it is also possible to display, using pop-up display or the like, a list of encryption keys for encrypting the encryption area already set.

An example of an operation of the decryption apparatus 150 decrypting an encrypted electronic document using the display screen 189 illustrated in FIG. 16 is described.

First, an operator of the decryption apparatus 150 reads an encrypted electronic document set as a decryption target using the file menu designation area 189g and displays the encrypted electronic document set as the target on the display unit 161. It is desirable that the decryption-processing control unit 156 searches through the electronic document to find whether or not encrypted area data is present and, when the encrypted area data is present, activates the decryption execution sub-menu designation area 189f.

The operator of the decryption apparatus 150 inputs an execution command by designating the decryption execution sub-menu designation area 189f, via the input unit 160 to thereby cause the decryption apparatus 150 to execute decryption processing for the encrypted electronic document.

In the display screen 189 described above, the functions of encryption and decryption are arranged on one menu. However, the functions of encryption and decryption may be separately arranged. In the example illustrated in FIG. 16, the encryption menu designation area 189a is added in the display screen displayed on the display units 141 and 161 by the electronic-document processing units 135 and 155. In this example, as described above, the functions are realized by mounting the functions in Acrobat (registered trademark) of Adobe (registered trademark), Word (registered trademark) of Microsoft (registered trademark), and the like as plug-in. However, the present invention is not limited to such an example. Independent electronic-document processing units 135 and 155 may be used for encryption and decryption.

In the display screen 189 illustrated in FIG. 16, the encryption function is added as the menu. However, the encryption function may be added as a tool bar or the like rather than the menu.

In the embodiment described above, the partial data set as a target of encryption obtained from the set encryption area is individually encrypted by the set encryption key to generate partially encrypted data. As decryption of the partially encrypted data, the individual partially encrypted data is decrypted by the decryption key.

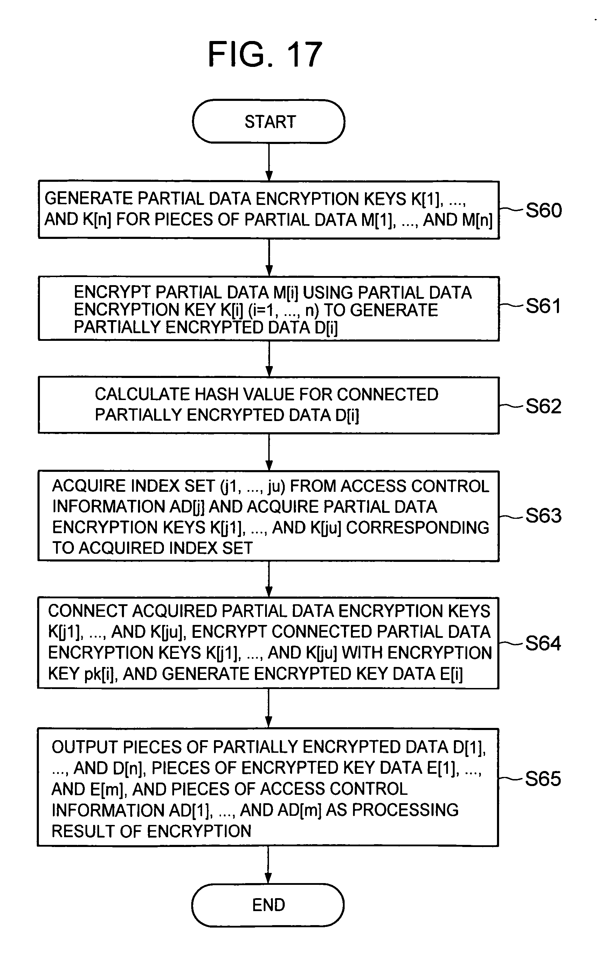

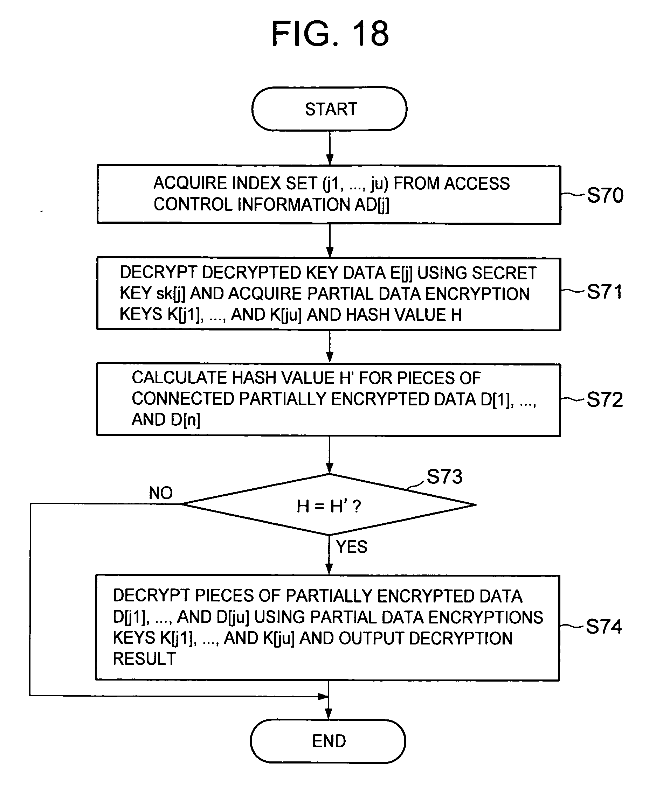

On the other hand, encryption processing as illustrated in FIG. 17 and decryption processing as illustrated in FIG. 18 may be performed.

FIG. 17 is a flowchart of a modification of the encryption processing performed by the encryption processing unit 137 of the encryption apparatus 130.

First, the encryption processing unit 137 acquires one or more pieces of encryption target data selected via the encryption-processing control unit 136 and the input unit 140 and an encryption key set for encrypting the encryption target data.

The acquired encryption target data is identified as an array of M[1], ..., and M [n] (n is a natural number equal to or larger than 1). An encryption key to encrypt M[1], ..., and M[n] is identified as an array of pk[1], ... , and pk [m] (m is a natural number equal to or larger than 1).

In access control information AD[i] (i is a natural number equal to or larger than 1) used in the encryption processing described later, a set of indexes j (j=1, ..., n) for specifying the encryption key pk[i] with which target data M[j] is encrypted, is stored. The access control information AD[i] may be easily set from a correspondence relation between encryption target partial data and a public key for encrypting the area, which is a setting result of encryption areas and encryption keys for each of encryption areas.

The encryption processing unit 137 generates a partial data encryption key K[i], which is a key of a common key cryptography technology, at random with respect to the encryption target data M[i] (i=1, ..., n) set as the encryption target (S60).

The encryption processing unit 137 encrypts the encryption target data M[i] set as the encryption target using the partial data encryption key K[i] generated in Step S60 (S61). Encrypted data is set as partially encrypted data D[i].

The encryption processing unit 137 calculates a hash value H from the connected pieces of the partially encrypted data D[1], ..., and D[n] by applying a hash function thereto (S62).

The encryption processing unit 137 acquires an index set (j₁, ..., and jᵤ) (u is a natural number equal to or lager than 1) from the access control information AD[i], acquires partial data encryption keys K[j₁], K[j₂],..., and K[jᵤ] corresponding to the acquired index set, and connects the partial data encryption keys (S63).

The encryption processing unit 137 connects the hash value H calculated in Step S62 to the connected partial data encryption keys K[j₁], K[j₂], ..., and K[jᵤ], and performs encryption using the encryption key (public key) pk[i] (S64). A result obtained by the encryption is set as encrypted key data E[i].

The encryption processing unit 137 outputs the pieces of the partially encrypted data D[1], ... , and D[n], pieces of encrypted key data E[1], ..., and E[m], and pieces of access control information AD[1], ..., and AD[m] as a result of the encryption processing (S65).

As an encryption result output in Step S65, the pieces of the access control information AD[1], ... , and AD [m] and the pieces of the encrypted key data E[1], ..., and E[m] are stored in the header area for encrypted data, and the pieces of the partially encrypted data D[1], ..., and D[n] are stored in the partially encrypted data area by the encryption-processing control unit 136. Consequently, encrypted area data is generated.

The calculation of the hash value H in Step S62 is used for verification of integrity of encrypted data (whether decryption result coincides with data given during encryption) in the decryption processing unit 157 of the decryption apparatus 150. The hash value is used in the example described above, but it is not always necessary to use the hash value, and a message authentication code(MAC), a digital signature, and the like may be used. When the integrity is not needed as described above, the calculation of the hash value H may be omitted.

FIG. 18 is a flowchart of a processing procedure in decrypting an encrypted electronic document encrypted by the encryption processing illustrated in FIG. 17.

First, the decryption processing unit 157 acquires the index set (j₁, ..., and jᵤ) from the access control information AD[j] of the encrypted area data of the encrypted electronic document (S70).

The decryption processing unit 157 decrypts the encrypted key data E[j] using a decryption key sk[j] stored in the key-management-information storage area 152, and acquires the partial data encryption keys K[j₁], K[j₂], ..., and K[jᵤ] and the hash value H (S71).

The decryption processing unit 157 calculates a hash value H' from the connected pieces of the partially encrypted data D[1], ..., and D[n] (S72), and compares the hash value H' with the hash value H acquired in Step S71 to judge whether or not the hash values coincide with each other (S73).

When the hash value H and the hash value H' are the same, the decryption processing unit 157 proceeds to Step S74. When the hash value H and the hash value H' are different, the decryption processing unit 157 finishes the processing and judges that the decryption has failed.

In Step S74, the decryption processing unit 157 decrypts pieces of partially encrypted data D[j₁], D[j₂], ..., and D[jᵤ] using the partial data encryption keys K[j₁], K[j₂], ..., and K[jᵤ] acquired in Step S71, and outputs a decryption result.

In the description above, for simplification of the description, one decryption key sk[j] is used. However, when a plurality of decryption keys are given, it is possible to obtain a decryption result for the plurality of decryption keys by repeating the processing in Steps S71 to S73. In this case, for example, when the processing is performed by using two different secret keys sk[j₁] and sk[j₂]_{,} it is desirable to output an error and finish the processing when inconsistency occurs in processing results (e.g., when results obtained by decrypting the same partially encrypted data C[1] are different).

When the compared hash values are different in Step S73 and then the decryption failure is output, it is desirable that the decryption processing unit 157 display a message indicating the decryption failure on the display unit 161.

As described above, according to this embodiment, one or more encryption areas are set in an electronic document and the respective encryption areas are encrypted by a plurality of encryption keys. When the encrypted electronic document is decrypted, decryption processing is applied to the encrypted electronic document by using a decryption key that is used in the decryption apparatus and a part (part that may be decrypted by decryption key that may be used) of the encrypted electronic document is restored to display the electronic document. In other words, for an encrypted electronic document, a display image of an electronic document to be generated by the decryption may be made different depending on a decryption key that is used by each of users.

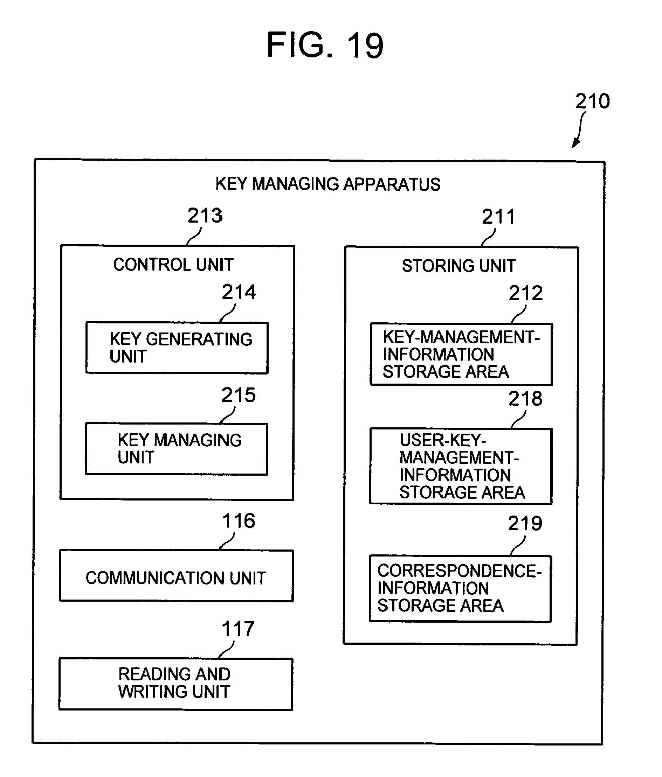

FIG. 19 (schematic diagram of key managing apparatus 210) is a diagram of a modified version of the keymanagement apparatus described in FIG.2.

As illustrated in FIG. 19, the key managing apparatus 210 according to the modification includes a storing unit 211, a control unit 213, a communication unit 116, and a reading and writing unit 117. Compared with the key managing apparatus 110 described above, the storing unit 211 and the control unit 213 are different. Therefore, differences related to these units are described below.

The storing unit 211 includes a key-management-information storage area 212, a user-key-management-information storage area 218, and a correspondence-information storage area 219.

Information for specifying a key for encrypting or decrypting electronic data is stored in the key-management-information storage area 212.

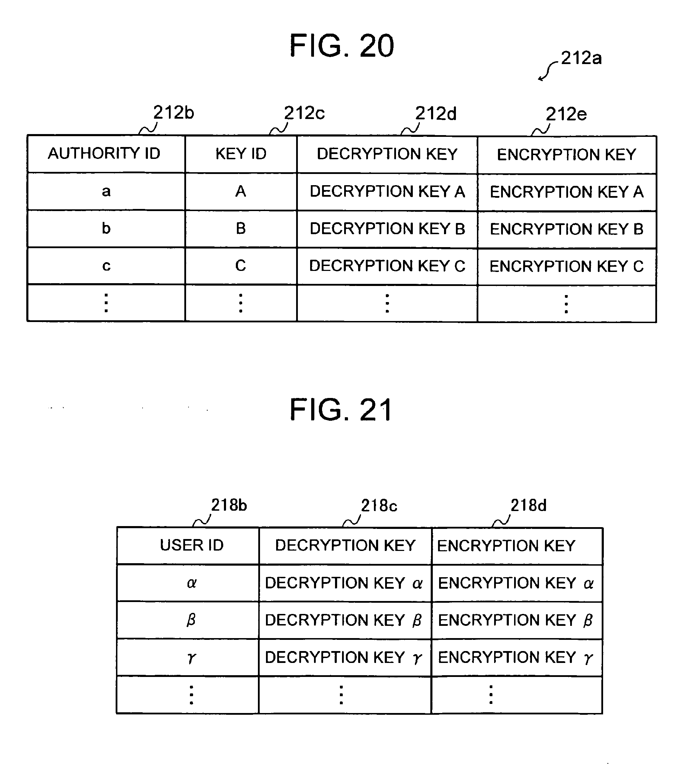

For example, a key management table 212a illustrated in FIG. 20 (schematic diagram of key management table 212a) is stored in the key-management-information storage area 212.

Information for specifying an encryption key for encrypting electronic data and a decryption key for decrypting the electronic data encrypted with the encryption key is stored in the key management table 212a.

Specifically, the key management table 212a includes an authority ID field 212b, a key ID field 212c, a decryption key field 212d, and an encryption key field 212e.

Authority IDs as identification information for identifying authority (qualification) allocated to users of the cryptography system 100 are stored in the authority ID field 212b.

Key IDs as identification information for identifying pairs of decryption keys specified in the decryption key field 112d and encryption keys specified in the encryption key field 112e are stored in the key ID field 212c.

Decryption keys for decrypting electronic data encrypted by encryption keys specified in the encryption key field 212e described later are stored in the decryption key field 212d.

Encryption keys for encrypting the electronic data are stored in the encryption key field 212e.

Referring back to FIG. 19, information for specifying a key for encrypting or decrypting the key management information stored in the key-management-information storage area 212 is stored in the user-key-management-information storage area 218.

For example, a user key management table 218a illustrated in FIG. 21 (schematic diagram of user key management table 218a) is stored in the user-key-management-information storage area 218.

Information for specifying an encryption key for encrypting key information and a decryption key for decrypting the key information encrypted with the encryption key is stored in the user key management table 218a.

Specifically, the user key management table 218a includes a user ID field 218b, a decryption key field 218c, and an encryption key field 218d.

User IDs as identification information for identifying users of the cryptography system 100 are stored in the user ID field 218b.

Decryption keys for decrypting key information encrypted by encryption keys specified in the encryption key field 218d described later are stored in the decryption key field 218c.

Encryption keys for encrypting the key information are stored in the encryption key field 218d.

Information for specifying authority of the users of the cryptography system 100 is stored in the correspondence-information storage area 219.

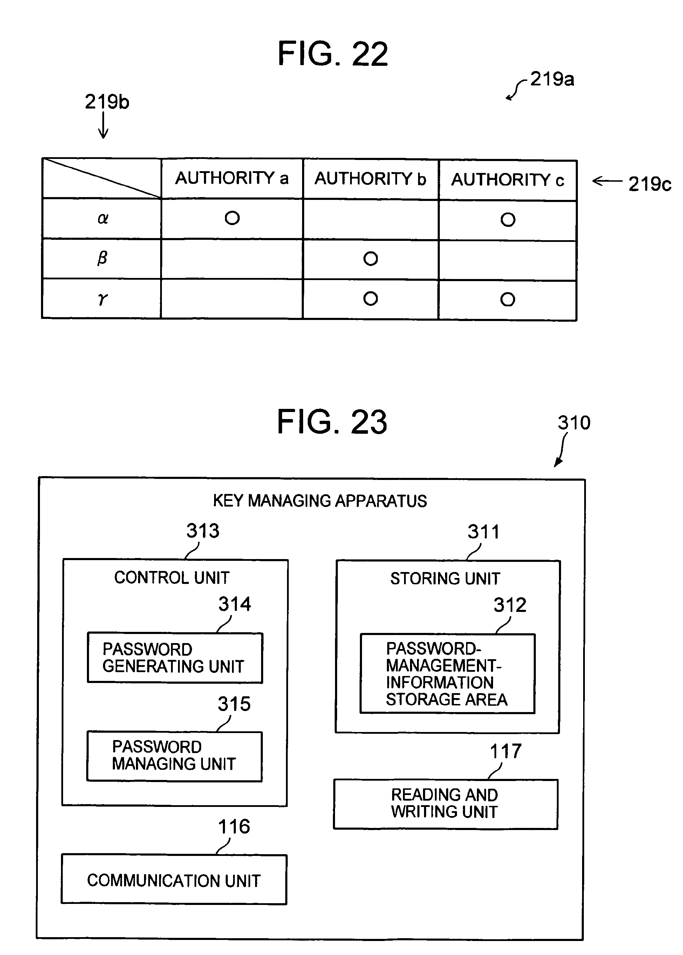

For example, a correspondence table 219a illustrated in FIG. 22 (schematic diagram of correspondence table 219a) is stored in the correspondence-information storage area 219.

As illustrated in FIG. 22, user IDs are stored in a column 219b on the left end of the correspondence table 219a. Authority IDs set in the cryptography system 100 are stored in a row 219c at the upper end. Circle signs are illustrated in fields located at intersections of rows corresponding to the user IDs and columns corresponding to the authority IDs. This indicates that authority specified by the authority ID is given to a user specified by the user ID.

The control unit 213 includes the key generating unit 214 and a key managing unit 215.

The key generating unit 214 performs, according to an instruction from an operator of the key managing apparatus 110 or the decryption apparatus 150, processing of generating a pair of an encryption key and a decryption key for each authority, generating a key ID for uniquely identifying the pair of the encryption key and the decryption key, and storing the encryption key, the decryption key, and the key ID in corresponding fields of the key management table 212a.

The key generating unit 214 performs, according to an instruction from the operator of the key managing apparatus 110 or the decryption apparatus 150, processing of generating a pair of an encryption key and a decryption key for each of users and storing the pair of the encryption key and the decryption key in a field corresponding thereto of the user key management table 218a.

The key managing unit 115 performs, according to an instruction from the operator of the key managing apparatus 110 or the decryption apparatus 150, processing of storing a correspondence relation between the users and the authority in the correspondence table 219a.

The key managing unit 115 performs, according to an instruction specifying a user ID from the operator of the key managing apparatus 110 or the decryption apparatus 150, processing of distributing the decryption key stored in the user key management table 218a.

In this embodiment, the decryption key is treated as a secret key. Therefore, it is desirable to distribute the decryption key by writing the decryption key on a storage medium (e.g., IC card), by the reading and writing unit 117, rather than transmitting the decryption key via the network 170 by using the communication unit 116.

The key managing unit 215 performs, according to an instruction specifying a user ID from the operator of the key managing apparatus 110 or the decryption apparatus 150, processing of specifying authority corresponding to the user ID in the correspondence table 219a, acquiring a decryption key corresponding to the specified authority from the key management table 112a, and distributing the acquired decryption key together with a key ID.

However, in distributing the decryption key, the key managing unit 215 acquires an encryption key corresponding to the user ID from the user key management table 218a and encrypts the decryption key corresponding to the authority with the acquired encryption key.

Further, the key managing unit 215 performs, according to an instruction, in which a user ID is specified, from the operator of the key managing apparatus 110 or the decryption apparatus 150, processing of specifying authority corresponding to the user ID in the correspondence table 219a, acquiring an encryption key corresponding to the specified authority from the key management table 112a, and distributing the acquired encryption key together with a key ID.

However, in distributing the encryption key, the key managing unit 215 acquires an encryption key corresponding to the user ID from the user key management table 218a and encrypts the encryption key corresponding to the authority with the acquired encryption key.

For example, when the key managing unit 215 distributes a key corresponding to authority to the user and the key managing unit 215 allocates authority "a" and authority "c" to a user α as illustrated in the correspondence table 219a, the key managing unit 215 acquires a decryption key A and a decryption key C corresponding to the authority "a" and the authority "c" from the key management table 212e, acquires an encryption key α of the user α from the user key management table 218a, encrypts the decryption key A and the decryption key C with the encryption key α, and transmits the encrypted decryption key A and the encrypted decryption key C to the decryption apparatus 150 via the network 170.

The decryption apparatus 150 decrypts, with a decryption key α of the user α already distributed, information transmitted from the key managing apparatus 210 and decrypts the decryption key A and the decryption key C and uses the decryption key A and the decryption key C. It is desirable in terms of security to perform the decryption of the decryption key A and the decryption key C in a distributed IC card in which the decryption key α is stored.

When a decryption key allocated to each kind of authority is distributed to the user, it is desirable to perform authentication of the user who receives the the decryption key, such as authentication performed by using an individual key in the IC card.

By distributing the decryption key to the user via the network 170 as described above, time and labor for directly passing a physical medium to the user, such as sending and collecting the IC card, is reduced. Since one IC card peculiar to each user only has to be issued to the user, even when a change in authority occurs, an authority key in the IC card only has to be rewritten. Therefore, time and labor for an administrator, such as reissuance and collection of the IC card, may be reduced.

In the embodiment described above, partially encrypted data is described at a position set in advance in an encrypted electronic document. However, the present invention is not limited thereto. For example, the encrypted area data may be created as a file separately from the electronic document. In this case, the encrypted electronic document and the encrypted area data should be associated with each other. Consequently, when the encrypted electronic document is decrypted, it is possible to decrypt and restore the encrypted electronic document by referring to a file associated with the encrypted electronic document.

In the embodiment described above, selection of an encryption target area in an electronic document is specified by a page number and coordinate information in a page specified by the page number. However, the present invention is not limited thereto. For example, when an identifier is allocated to an object forming the electronic document and the object may be designated by designating the identifier, the identifier of the object may be used as auxiliary data for restoration instead of the page number and the coordinate information. According to a method of designating an object, if information necessary for designating an object set as a restoration target when data is restored during decryption has been obtained and if an object in the electronic document is uniquely designated by another information, the information instead of the identifier does not have to be used (e.g., when the electronic document is described in the XML, Xpath or the like may be used).

In the embodiment described above, partial data set as a target of encryption is deleted from an electronic document. However, for example, data may be replaced with an alternative text, dummy data, or the like. Specifically, when an encryption setting area includes a text and a part of a text in an object is designated, data may be replaced with a space or a character such as "*". When the encryption setting area designates a part of image data, it is desirable to replace data with image data of black rather than deleting the data.

In the processing described above, after the partial data set as an encryption target is deleted, the black mask image is fit in an electronic document. However, for example, a mask image of another color or an image marked "inked" may be fit in the electronic document or a mask image does not have to be fit in the electronic document. Alternatively, areas that is decrypted by the same decryption key may be distinguished by changing a color of a mask image for each of encrypted areas.

In the embodiment described above, so-called masking processing of fitting a mask image every time one encryption setting area is set is performed. However, the present invention is not limited thereto. Set encryption setting areas may be temporarily stored in the storing unit 131 and, for example, when encryption is executed, the masking processing may be collectively applied to the stored encryption setting areas.

In this embodiment, the encryption processing is performed immediately after the encryption area is set. However, the setting of the encryption setting area and the encryption processing may be separately performed by, for example, extracting auxiliary data are for restoration as a file. This makes it unnecessary to separately set encryption setting areas for, for example, a plurality of electronic documents having the same format.

In deletion (or replacement processing) of data in the masking processing, when data in an object is compressed and stored by using, for example, LZW (in the case of an image, JPEG or PNG), it is sufficient to expand the data in the object compressed once, carry out the processing described above, apply compression processing to the data again, and regenerate an object.

In the execution of the decryption processing, prior to the execution of the decryption processing in Step S42 illustrated in FIG. 14, an area that is decrypted may be specified by auxiliary data for restoration with a given secret key, which is used for decryption, and indicated to the user in advance by, for example, making the area blink, changing a color of the area, or surrounding the area with a dotted line.

In the display of the electronic document in Step S44 after the execution of the decryption processing in Step S42 illustrated in FIG. 14, an area decrypted by the given secret key may be clearly indicated by, for example, making the area blink, changing a color of the area, or surrounding the area with a dotted line.

In the embodiment described above, the public key system is adopted, the public key is used as the encryption key, and the secret key is used as the decryption key. However, the present invention is not limited thereto. For example, it is also possible to use a common key of the common key technology as both the encryption key and the decryption key. When the common key is used, it is desirable in terms of security to surely distribute the secret key directly to the user by, for example, storing both the encryption key and the decryption key in a device having tamper resistance such as an IC card and distributing the keys, and prevent the keys from being easily copied.

In the modification described above, the secret key is stored in the IC card. However, the secret key may be stored in the key-management-information storage area 152 in the decryption apparatus 150 as well. For example, the secret key may be stored in the key-management-information storage area 152 in the decryption apparatus 150 and the distribution of the decryption key by the encryption communication may be performed during execution (before execution) of the decryption processing in Step S42 illustrated in FIG. 14.

Alternatively, the encryption key and the decryption key may be respectively acquired from the key-management-information storage area 112 in the key management apparatus 110 during execution (before execution) of the encryption processing in Step S22 illustrated in FIG. 10 and during execution (before execution) of the decryption processing in Step S42 illustrated in FIG. 14. In this case, the encryption key and the decryption key may be respectively temporarily stored in the key-management-information storage area 132 in the encryption apparatus 130 and the key-management-information storage area 152 in the decryption apparatus 150 during execution (before execution) of the encryption processing in Step S22 illustrated in FIG. 10 and during execution (before execution) of the decryption processing in Step S42 illustrated in FIG. 14. The acquired encryption key and the acquired decryption key may be respectively deleted during execution (after execution) of the encryption processing in Step S22 illustrated in FIG. 10 and during execution (after execution) of the decryption processing in Step S42 illustrated in FIG. 14.

In such a case, as described above, the decryption key is important information in decrypting and disclosing an encrypted area in an electronic document according to a user or authority owned by the user (group to which user belongs). Therefore, in the key managing apparatus 110, it is desirable to prevent an unnecessary decryption key from being acquired during decryption by, for example, performing access control according to a user who uses the decryption apparatus.

As described in this embodiment, since the public key cryptography system is adopted, there is an advantage that a user who encrypts an electronic document may encrypt the electronic document with the encryption key serving as public information and the user who encrypts the electronic document and a user who decrypts the electronic document do not need to share information in advance. Second Embodiment

A second embodiment of the present invention is described below.

In the second embodiment of the present invention, compared with the first embodiment of the present invention, a key managing apparatus 310, an encryption apparatus 330, and a decryption apparatus 350 are different. Therefore, differences related to these apparatuses are described below.

In this embodiment, as in the first embodiment of the present invention, the key managing apparatus 310, the encryption apparatus 330, and the decryption apparatus 350 may mutually transmit and receive information via the network 170.

FIG. 23 is a schematic diagram of the key managing apparatus 310 according to the second embodiment of the present invention.

As illustrated in FIG. 23, the key managing apparatus 310 includes a storing unit 311, a control unit 313, the communication unit 116, and the reading and writing unit 117. Compared with the first embodiment, the storing unit 311 and the control unit 313 are different. Therefore, differences related to these units are described below.

The storing unit 311 includes a password-management-information storage area 312.

Information for specifying a password used in encrypting or decrypting electronic data is stored in the password-management-information storage area 312.

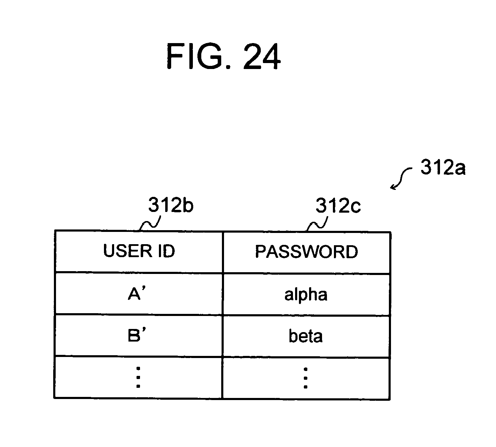

For example, a password management table 312a as illustrated in FIG. 24 (schematic diagram of password management table 312a) is stored in the password-management-information storage area 312.

Information for specifying a user who encrypts or decrypts electronic data and a password used by the user is stored in the password management table 312a.

Specifically, the password management table 312a includes a user ID field 312b and a password field 312c.

Information for specifying a user ID serving as identification information for identifying a user who decrypts encrypted electronic data is stored in the user ID field 312b.

As the user ID, a name, an email address, or the like for specifying the user may be used. As the user ID, not only the identification information for specifying the individual user but also identification information used by one or more users, such as authority, roles, a mailing list, or the like, may be used.

A password used by a user specified in a user ID field is stored in the password field 312c.

In the second embodiment of the present invention, decryption of data encrypted by using a password is performed. Therefore, it is desirable to prevent the password from being disclosed to inappropriate users by, for example, limiting access of users who may use the key managing apparatus 310 (in particular, password field 312c) by access control.

Referring back to FIG. 23, the control unit 313 includes a password generating unit 314 and a password managing unit 315.

The password generating unit 314 generates a password according to an instruction from the operator of the key managing apparatus 310 or the decryption apparatus 350.

As the password, a random character string may be used. However, the present invention is not limited thereto. For example, input of an arbitrary character string may be received from the operator of the key managing apparatus 310 or the decryption apparatus 350.

The password managing unit 315 performs, according to an instruction from the operator of the key managing apparatus 310 or the decryption apparatus 350, processing of distributing the password stored in the password management table 312a together with the user ID.

In,this embodiment, since decryption is performed by using the password, it is desirable to distribute the password by writing the password in a portable storage medium set in the reading and writing unit 117 rather than transmitting the password via the communication unit 116 and the network 170. It is desirable in terms of security to store the secret key in a device (e.g., IC card) or the like having tamper resistance to prevent the secret key from being easily copied.

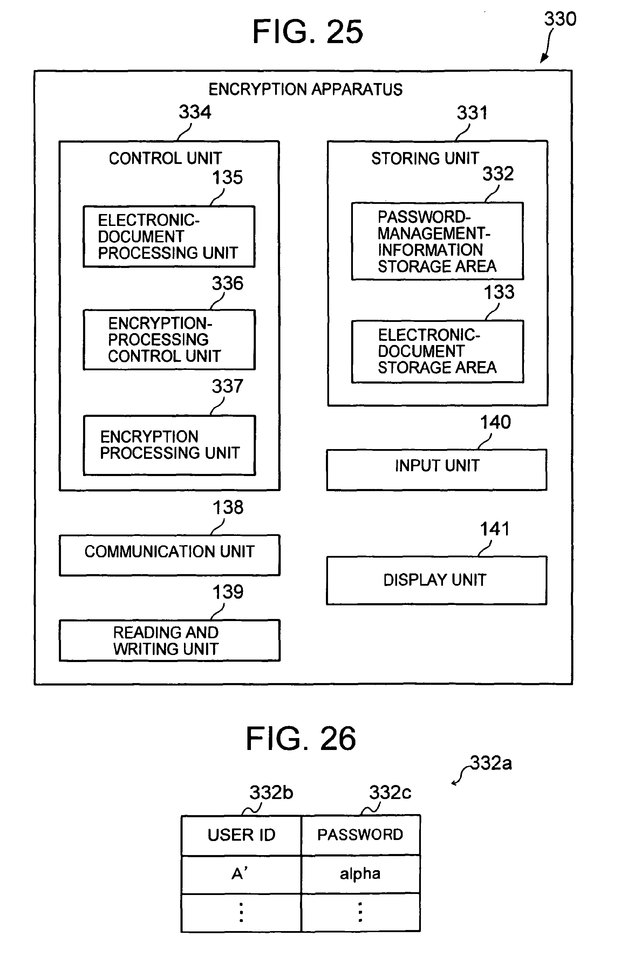

FIG. 25 is a schematic diagram of the encryption apparatus 330 according to the second embodiment of the present invention.

As illustrated in FIG. 25, the encryption apparatus 330 includes a storing unit 331, a control unit 334, the communication unit 138, the reading and writing unit 139, the input unit 140, and the display unit 141. Compared with the first embodiment of the present invention, the storing unit 331 and the control unit 334 are different. Therefore, differences related to these units are described below.

The storing unit 331 includes a password-management-information storage area 332 and the electronic-document storage area 133. Compared with the first embodiment of the present invention, the password-management-information storage area 332 is different. Therefore, differences related to the area are described below.

Information for specifying a password used for performing encryption is stored in the password-management-information storage area 332. As the password, a password distributed from the key managing apparatus 310 is stored.

For example, a password management table 332a illustrated in FIG. 26 (schematic diagram of password management table 332a) is stored in the password-management-information storage area 332.

The password management table 332a includes a user ID field 332b and a password field 332c.

Information for specifying a user ID serving as identification information for specifying a user who decrypts encrypted electronic data is stored in the user ID field 332b. In this embodiment, as the user ID, a user ID distributed from the key managing apparatus 310 together with the password is stored in this field. In this embodiment, it is possible to specify, by specifying the user ID, a disclosee of partially encrypted data.

Information for specifying a password used by the user specified in the user ID field 332b is stored in the password field 332c. In this embodiment, as the password, a password distributed from the key managing apparatus 310 is stored in this field. In this embodiment, the password is used as encryption information.

Referring back to FIG. 25, the control unit 334 includes the electronic-document processing unit 135, an encryption-processing control unit 336, and an encryption processing unit 337. Compared with the first embodiment of the present invention, the encryption-processing control unit 336 and the encryption processing unit 337 are different. Therefore, differences related to these units are described below.

The encryption-processing control unit 336 receives, via the input unit 140, setting of an encryption target area and user to be permitted to decrypt the electronic data included in the electronic document displayed on the display unit 141 by the electronic-document processing unit 135.

The processing of setting the encryption target area is processing of specifying a page number and a position (coordinate) from an encryption target area of an electronic document designated via the input unit 140, deleting encryption target data, which is electronic data at the specified position, from the electronic document, and arranging another piece of electronic data (mask image in this case) determined in advance, from which the encryption target data may not be recognized, at the specified position.

The processing of setting the user to be permitted to perform decryption is processing of specifying, for each encryption target area input via the input unit 140, a user permitted to decrypt electronic data included in the encryption target area from the user ID stored in the password-management-information storage area 332.

The encryption-processing control unit 336 outputs encryption target data, which is electronic data included in the received encryption target area, and a user ID, for which viewing of the encryption target data is permitted, to the encryption processing unit 337.

The encryption-processing control unit 336 acquires encrypted area data from the encryption processing unit 337. Then, the encryption-processing control unit 135 adds the acquired encrypted area data to a position determined in advance of the electronic document, which is displayed on the display unit 141 by the electronic-document processing unit 135, to generate an encrypted electronic document.

When an execution command for encryption is input via the input unit 140, with respect to the electronic document displayed on the display unit 141 by the electronic-document processing unit 135, the encryption processing unit 337 specifies a password in the password management table 332a from the user ID output from the encryption-processing control unit 336 and encrypts the encryption target data, which is output from the encryption-processing control unit 336, using the specified password to generate partially encrypted data.

The encryption processing unit 337 generates encrypted area data including the generated partially encrypted data, positional information (auxiliary data for restoration) for specifying a page number and a position of the partially encrypted data in the electronic document, and decryption information (header for encrypted data) for specifying a user ID for specifying a user (disclosee) permitted to decrypt each of the partially encrypted data, and outputs the encrypted area data to the encryption-processing control unit 336.

For example, in this embodiment, in the encrypted area data 282 illustrated in FIG. 12, it is sufficient to provide an attribute "user_{_}id" instead of the attribute "key_{_}id" in the "EncryptedKeyData" element of the header area for encrypted data 283 and store the user ID in the attribute. When an email address is used as the user ID, the email address may be stored in the attribute "user_{_}id". It is also possible to appropriately change a name of the attribute "user_{_}id" to "mail" or the like.

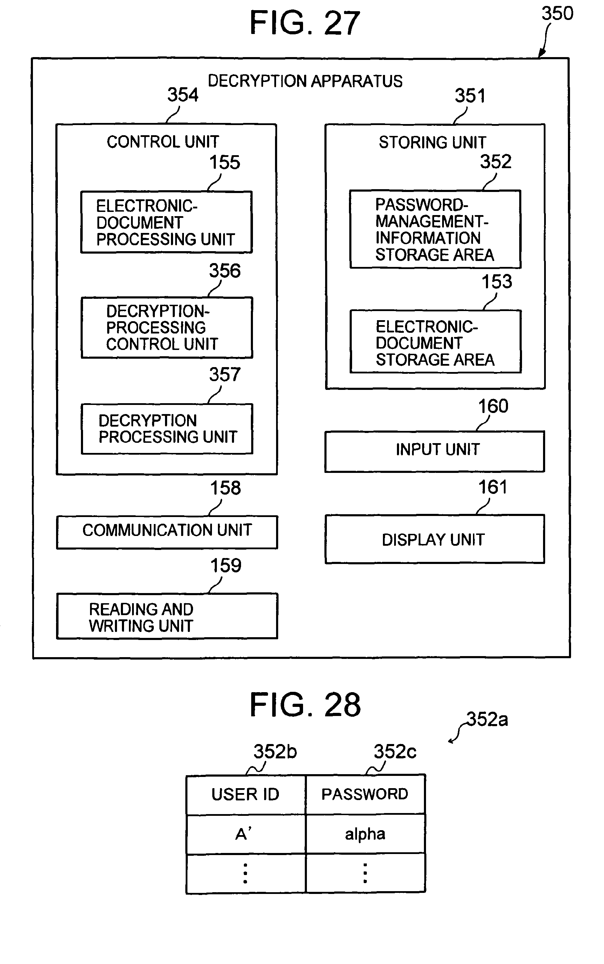

FIG. 27 is a schematic diagram of the decryption apparatus 350 according to the second embodiment of the present invention.

As illustrated in FIG. 27, the decryption apparatus 350 includes a storing unit 351, a control unit 354, the communication unit 158, the reading and writing unit 159, the input unit 160, and the display unit 161. Compared with the first embodiment of the present invention, the storing unit 351 and the control unit 354 are different. Therefore, differences related to these units are described below.

The storing unit 351 includes a password-management-information storage area 352 and the electronic-document storage area 153. Compared with the first embodiment of the present invention, the password-management-information storage area 352 is different. Therefore, differences related to the area are described below.

Information for specifying a password used for performing decryption is stored in the password-management-information storage area 352. As the password, a password distributed from the key managing apparatus 310 is stored.

For example, a password management table 352a illustrated in FIG. 28 (schematic diagram of password management table 352a) is stored in the password-management-information storage area 352.

The password management table 352a includes a user ID field 352b and a password field 352c.

Information for specifying a user ID serving as identification information for specifying a user who decrypts encrypted electronic data is stored in the user ID field 352b. In this embodiment, as the user ID, a user ID distributed from the key managing apparatus 310 together with the password is stored in this field.

Information for specifying a password used by the user specified in the user ID field 352b is stored in the password field 352c. In this embodiment, as the password, a password distributed from the key managing apparatus 310 is stored in this field.

Referring back to FIG. 27, the control unit 354 includes the electronic-document processing unit 155, an encryption-processing control unit 356, and an encryption processing unit 357. Compared with the first embodiment of the present invention, the encryption-processing control unit 356 and the encryption processing unit 357 are different. Therefore, differences related to these units are described below.

The decryption-processing control unit 356 receives an instruction for decryption processing via the input unit 160 in the electronic document displayed by the electronic-document processing unit 155.

The decryption-processing control unit 356 receives the instruction for decryption processing. Then, the decryption-processing control unit 356 acquires encrypted area data added to the electronic document displayed by the electronic-document processing unit 155.

The decryption-processing control unit 356 acquires a password from information (user ID in this case) for specifying the user, which is included in a header for encrypted data of the acquired encrypted area data, and acquires the specified password from the password management table 352a stored in the password-management-information storage area 352.

The decryption-processing control unit 356 outputs the acquired password and partially encrypted data included in the encrypted area data to the decryption processing unit 357.

The decryption-processing control unit 356 stores decrypted data decrypted by the decryption processing unit 357 at a position set in advance of the electronic document to restore the electronic document.

The decryption processing unit 357 decrypts the partially encrypted data using the password output from the decryption-processing control unit 356, and outputs the decrypted data to the decryption-processing control unit 356.

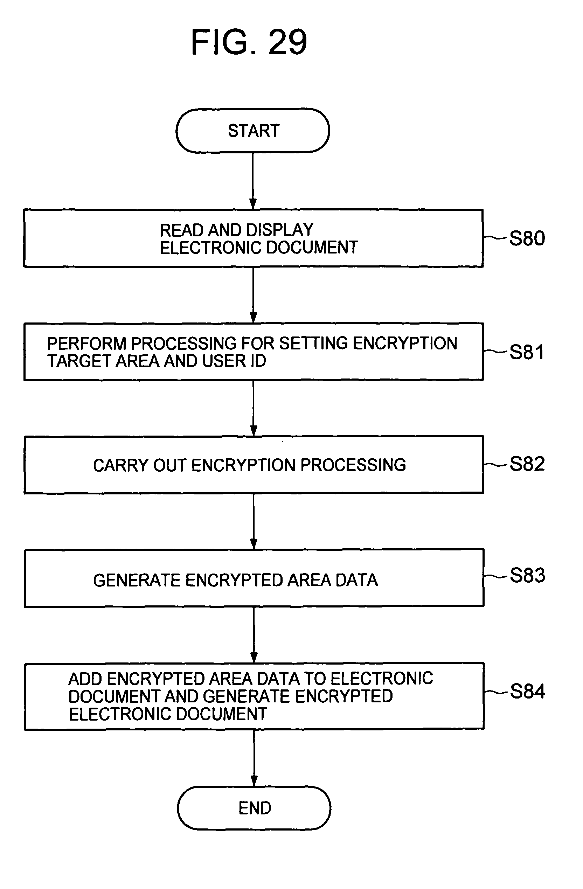

FIG. 29 is a flowchart of processing of creating an encrypted document in the encryption apparatus 330.

The electronic-document processing unit 135 of the encryption apparatus 330 reads an electronic document including electronic data such as an image or a text, and displays the electronic document on the display unit 141 (S80).

In the electronic document displayed on the display unit 141 by the electronic-document processing unit 135, the encryption-processing control unit 336 receives, via the input unit 140, setting of an encryption target area and a user ID, and performs encryption-target-area setting processing and user ID setting processing (S81). The encryption-target-area setting processing is the same as that of FIG. 13, and hence the description thereof is omitted.

In Step S81, the operator of the encryption apparatus 330 sets one or more encryption target areas in the electronic document via the input unit 140, and sets, for the respective set encryption target areas, one or more user IDs in order to determine users who may decrypt the encryption target areas.

The operator only has to set the encryption target areas via the input unit 140 such as a mouse or a keyboard using a selection tool provided by the elect ronic-document processing unit 135. The operator only has to set the user IDs for the respective encryption target areas by, for example, designating the user ID stored in the password management table 332a stored in the password-management-information storage area 332 using a file dialog or the like.

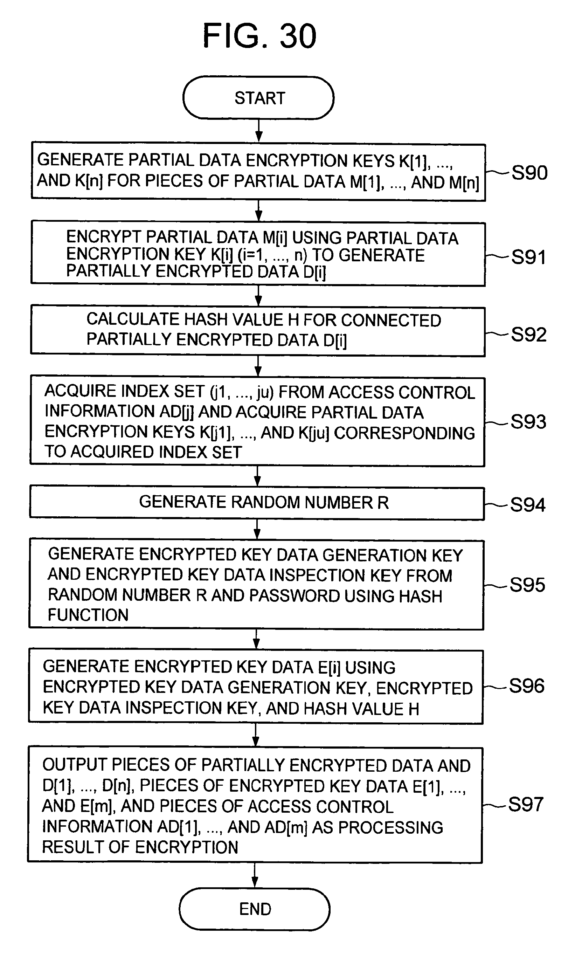

The encryption-processing control unit 336 of the encryption apparatus 330 acquires encryption target data acquired in the encryption-target-area setting processing performed in Step S81, page numbers of the encryption target areas, and positional information of the encryption target areas, and also acquires the user IDs set in Step S81 from the password-management-information storage area 332, and outputs the user IDs to the encryption processing unit 337. The encryption processing unit 337 encrypts the output encryption target data (S82). The encryption processing is described in detail with reference to FIG. 30.

The encryption processing unit 337 generates encrypted area data using the partially encrypted data (S83).

The encrypted area data includes the partially encrypted data, the page numbers and positional information of the encryption target areas, and information for specifying a user ID.

The encryption-processing control unit 336 adds the encrypted area data generated in Step S83 to a position set in advance of the electronic document to generate an encrypted electronic document (S84).

FIG. 30 is a flowchart of the encryption processing performed by the encryption processing unit 337 of the encryption apparatus 330.

First, the encryption processing unit 337 acquires one or more pieces of encryption target data selected via the encryption-processing control unit 336 and the input unit 140 and a user ID set for encrypting the encryption target data.

The acquired encryption target data is identified as an array of M[1], ..., and M[n] (n is a natural number equal to or larger than 1).

In access control information AD[i] (i is a natural number equal to or larger than 1) used in the encryption processing described later, a set of indexes j (j=1, ..., n) for specifying reference to each encryption target data M[j], which is encrypted by the same user ID, is stored.

The encryption processing unit 337 generates a partial data encryption key K[i], which is a key of a common key cryptography technology, at random with respect to the encryption target data M[i] (i=1, ..., n) set as the encryption target (S90).

The encryption processing unit 337 encrypts the encryption target data M[i] set as the encryption target using the partial data encryption key K[i] generated in Step S90 (S91). Encrypted data is set as partially encrypted data D[i].

The encryption processing unit 337 calculates a hash value H from the connected pieces of the partially encrypted data D[1], ..., and D[n] by applying a hash function thereto (S92).

The encryption processing unit 337 acquires an index set (j₁, ..., and jᵤ) (u is a natural number equal to or lager than 1) from the access control information AD[i], acquires partial data encryption keys K[j₁], K[j₂], ..., and K[jᵤ] corresponding to the acquired index set, and connects the partial data encryption keys (S93).

The encryption processing unit 337 generates a random number R at random (S94).

The encryption processing unit 337 connects the random number R generated in Step S94 with a password corresponding to the user ID acquired in Step S81 illustrated in FIG. 29, generates a hash value (e.g., 256 bits) using a hash function, divides the obtained hash value into two, sets one hash value (e.g., higher order 128 bits) as a encrypted key data generation key, and sets the other hash value (e.g., lower order 128 bits) as a encrypted key data inspection key (S95).

Then, the encryption processing unit 337 applies, using the generated encrypted key data generation key, encryption by the common key cryptography technology to the partial data encryption keys K[j₁], ..., and K[jᵤ] acquired in Step S93. (A cryptogram obtained as a result of this encryption is referred to as encrypted key data body EB[i]).

The encryption processing unit 337 further generates a MAC value of the encrypted key data body EB[i] using the encrypted key data inspection key (obtained MAC value is referred to as encrypted key data inspection section EC[i]).

The encryption processing unit 337 connects the encrypted key data body EB[i], the encrypted key data inspection section EC[i], and the random number R generated in Step S94 to generate encrypted key data E[i] (S96).

Arbitrary hash functions, encryption functions, MAC functions may be used. For example, MD5, SHA1, and the like may be used as the hash function, AES, DES, and the like may be used for encryption, and HMAC and the like may be used for generation of the MAC value. When an obtained hash value is smaller than a data size necessary for the encrypted key data generation key and the encrypted key data inspection key, it is sufficient to generate a hash value equal to or larger than the necessary data size by, for example, applying the hash function to the obtained hash value again and discard a surplus.

The data may be combined by using a format such as ASN.1 or XML to make it possible to divide the data at the time of the data decryption. Alternatively, it is sufficient to set in advance the encrypted key data body EB[i], the encrypted key data inspection section EC[i], and the random number R according to a data size and storage order which are predetermined parameters used in common in the system and, at the time of the data decryption, extract the encrypted key data body EB[i], the encrypted key data inspection section EC[i] and the random number R according to a necessary data size and order using the parameters.

The encryption processing unit 337 outputs the pieces of the partially encrypted data D[1], ... , and D[n], pieces of encrypted key data E[1], ..., and E[m], and pieces of access control information AD[1], ..., and AD[m] as a result of the encryption processing (S97).

As an encryption result output in Step S97, the pieces of the access control information AD[1], ..., and AD[m] and the pieces of encrypted key data E[1], ..., and E[m] are stored in the header area for encrypted data, and the pieces of the partially encrypted data D[1], ..., and D[n] are stored in the partially encrypted data area by the encryption-processing control unit 336. Consequently, encrypted area data is generated.

In the flowchart illustrated in FIG. 30, the random number R is generated (Step S94) before generation of the hash value and the random number R and the password is connected to generate the hash value. However, the password may be treated as a binary row and directly used as the encryption key and the decryption key, or the hash value may be generated without connecting the password to the random number row.

In the flowchart illustrated in FIG. 30, the MAC value is generated for the partial data encryption keys K[j₁], ..., and K[jᵤ], which are acquired in Step S93, by using the encrypted key data inspection key. However, the encrypted key data inspection key and the MAC value do not have to be generated. Instead of generating the MAC value for a result obtained by encryption by the encrypted key data generation key acquired in Step S93, the MAC value may be generated for the partial data encryption keys K[j₁], ..., and K[jᵤ].

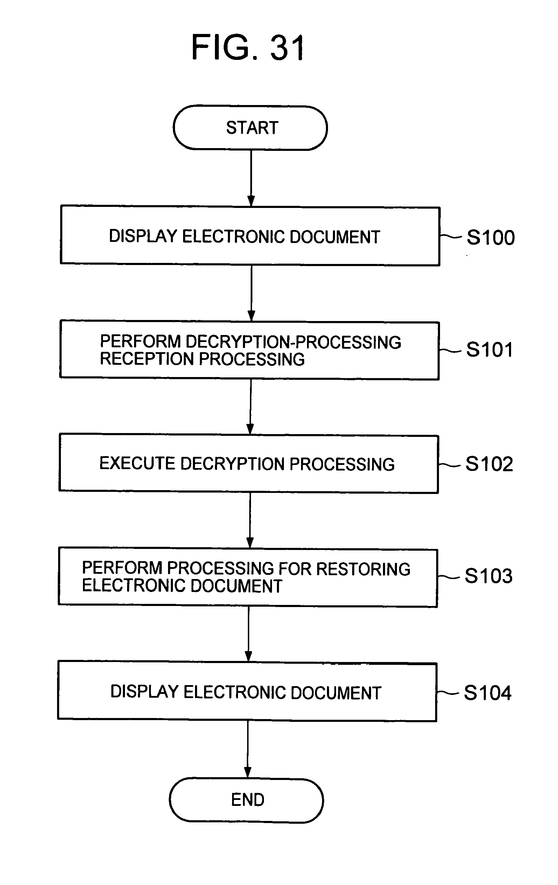

FIG. 31 is a flowchart of processing of decrypting an encrypted electronic document in the decryption apparatus 350.

The electronic-document processing unit 155 of the decryption apparatus 350 displays an electronic document, which is stored in the electronic-document storage area 153, on the display unit 161 (S100).

The decryption-processing control unit 356 detects whether or not encrypted area data is present in the electronic document and, when the encrypted area data is present, receives decryption processing (S101).

The decryption-processing control unit 356 only has to detect whether or not the encrypted area data is present by, for example, when the electronic document adopts a data format such as the PDF, searching through all objects forming the PDF and judging whether or not there is an object having a format corresponding to the encrypted area data in the object. When the electronic document adopts a data format such as the XML, the decryption-processing control unit 356 may detect whether or not the encrypted area data is present by judging whether or not an element corresponding to the encrypted area data is present.

The reception of the decryption processing may be realized by, for example, preparing a button for decryption execution as a selection menu in a screen on which the electronic document is displayed (when the encrypted area data is not present, the button only has to be set inactive to prevent the decryption processing from being executed).

The decryption-processing control unit 356 acquires necessary information from the encrypted area data in the electronic document and outputs the information to the decryption processing unit 357. The decryption processing unit 357 then executes the decryption processing (S102).

The decryption-processing control unit 356 acquires a user ID from the header area for encrypted data of the encrypted area data and judges whether or not the information corresponding to the user ID is stored in the user ID field 352b of the password management table 352a. When the information is stored in the user ID field 352b, the decryption-processing control unit 356 acquires partially encrypted data stored in association with the stored user ID from the partially encrypted data area.

The decryption-processing control unit 356 acquires a user ID from the header area for encrypted data of the encrypted area data and acquires a password corresponding to the user ID from the password management table 352a.

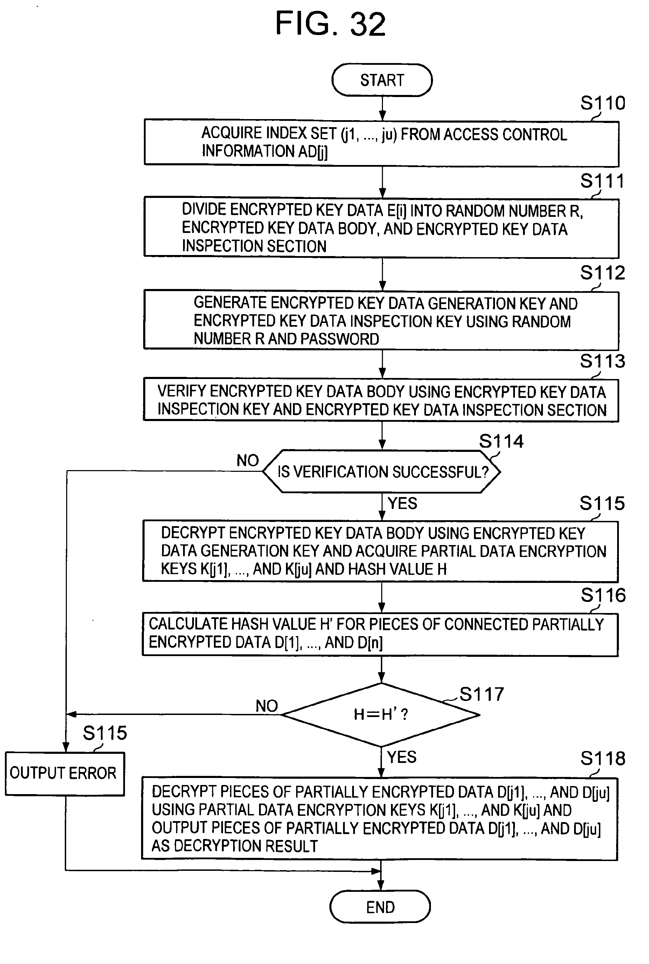

The decryption-processing control unit 356 outputs the acquired partially encrypted data and the password to the decryption processing unit 357. The decryption processing unit 357 performs decryption. The decryption processing is described in detail with reference to FIG. 32.

The decryption-processing control unit 356 fits decrypted data decrypted by the decryption processing unit 357 in the electronic document to thereby restore the electronic document (S103). The electronic-document processing unit 155 displays the restored electronic document on the display unit 161 (S104). Restoration processing performed in Step S103 is the same as that of FIG. 15, and hence the description thereof is omitted.

When some decryption error occurs in the decryption processing unit 357, it is desirable to display a message concerning a decryption failure on the display unit 161.

FIG. 32 is a flowchart of a processing procedure in decrypting an encrypted electronic document encrypted by the encryption processing illustrated in FIG. 30.

First, the decryption processing unit 357 acquires the index set (j₁, ..., and jᵤ) from the access control information AD[j] of the encrypted area data of the encrypted electronic document (S110).

The decryption processing unit 357 divides the encrypted key data E[i] into the random number R, the encrypted key data body EB[i], and the encrypted key data inspection section EC[i] (S111).

Next, the decryption processing unit 357 performs processing same as that in Step S95 illustrated in FIG. 30 according to the obtained random number R and the password acquired in Step S102 illustrated in FIG. 31 and generates a encrypted key data generation key and a encrypted key data inspection key (S112).

The decryption processing unit 357 then verifies the encrypted key data body EB[i] according to MAC, using the encrypted key data inspection key and the encrypted key data inspection section EC[i] (S113).

In Step S113, the decryption processing unit 357 calculates a MAC value of the encrypted key data body EB[i] divided in Step S111 using the encrypted key data inspection key generated in Step S112. When the calculated MAC value coincides with the encrypted key data inspection section EC[i] divided in Step S111, the decryption processing unit 357 judges that the verification is successful.

When the decryption processing unit 357 fails in the verification in Step S113 (No in Step S114), the decryption processing unit 357 proceeds to Step S115, outputs an error (decryption failure) to the display unit 161, and terminates the processing.

On the other hand, when the decryption processing unit 357 succeeds in the verification (Yes in Step S114), the decryption processing unit 357 proceeds to Step S115.

In Step S115, the decryption processing unit 357 decrypts the encrypted key data body EB[i] using the encrypted key data generation key acquired in the Step S112, and acquires the partial data encryption keys K[j₁], K[j₂], ..., and K[jᵤ] and the hash value H.

The decryption processing unit 357 calculates a hash value H' from the connected pieces of the partially encrypted data D[1], ..., and D[n] (S116), and compares the hash value H' with the hash value H acquired in Step S115 to judge whether or not the hash values coincide with each other (S117).

When the hash value H and the hash value H' are the same, the decryption processing unit 357 proceeds to Step S118. When the hash value H and the hash value H' are different, the decryption processing unit 357 proceeds to Step S115, outputs an error (decryption failure) to the display unit 161, and terminates the processing.

In Step S118, the decryption processing unit 357 decrypts pieces of partially encrypted data D[j₁], D[j₂], ..., and D[jᵤ] using the partial data encryption keys K[j₁], K[j₂], ..., and K[jᵤ] acquired in Step S115, and outputs a decryption result.

The encryption using the password and the generation of the encrypted key data generation key and the encrypted key data inspection key in decryption according to the second embodiment of the present invention described above may be performed by using, for example, the method described in RSA Laboratory, "PKCS#5: Password-Based Cryptography Standard", October 2006.

In the second embodiment of the present invention described above, the password is stored in the key managing apparatus 310 instead of the secret key and the public key stored in the key managing apparatus 110 according to the first embodiment of the present invention. However, it is also possible not to use the key managing apparatus 310 by sharing a password used for encryption and decryption using, for example, an email between a user who performs encryption and a user who performs decryption.

In the second embodiment of the present invention, the password-management-information storage area 352 in the decryption apparatus 105 does not have to be provided. In this case, in the acquisition of the user ID and the password corresponding thereto necessary for decryption, a dialog may be displayed to urge the user to input an ID and a password.

FIGS. 30 and 32 are examples of the encryption processing and the decryption processing according to this embodiment. As in the case of the first embodiment, the encryption processing and the decryption processing may be different from the examples. For example, as described in the first embodiment of the present invention, a encrypted key data generation key and a encrypted key data inspection key may be generated from a set user ID and a password corresponding thereto (S94 and S95), and partial data as a target of encryption obtained from a set encryption area may be individually encrypted by using the encrypted key data generation key and the encrypted key data inspection key to generate partially encrypted data. For decryption of the partially encrypted data in FIG. 32, a encrypted key data generation key and a encrypted key data inspection key may be generated from the password (S112), and the individual partially encrypted data may be decrypted by using the encrypted key data generation key and the encrypted key data inspection key (S112).

It is also possible to use the second embodiment and the first embodiment in combination. For example, at least one of a set of an encryption key and a decryption key and a password is managed in association with a user ID in the key-management-information storage area 112 in the key managing apparatus 110. When a user who performs decryption has the pair of the encryption key and the decryption key or the password, a user who performs encryption may use either the encryption key or the password which the user who performs decryption has. When the user has both the pair of the encryption key and the decryption key and the password, a user who performs encryption may use either the encryption key or the password by setting which one is used by default.

When encryption and decryption are performed by combining the second embodiment and the first embodiment as described above, in order to clearly indicate which of the public key cryptography technology and the common key cryptography technology (or password) is used to perform the decryption processing, for example, in the example of the encrypted area data 282 illustrated in FIG. 12, an algorithm used for decryption may be described by setting the "KeyEncryptionAlgorithm" element not in the "MRES_{_}Param" element but in the "EncryptedKeyData" element.

In decryption, for example, when the decryption processing is performed by using the secret key of the public key cryptography technology, both the key-management-information storage area 152 and a password-information storage area are provided in the decryption apparatus 150, and secret keys and passwords are stored in both the storage areas, respectively. Before execution of the decryption processing (Step S42 illustrated in FIG. 14), the secret keys and the passwords stored in these storage areas may be searched to perform the decryption processing.

Alternatively, the password-information storage area does not have to be provided in the decryption apparatus 150. After the decryption processing is performed by using the secret key stored in the key-management-information storage area 152, a dialog may be displayed to urge the user to input an ID and a password.

In the second embodiment of the present invention, the password generating unit 314 is provided in the key managing apparatus 310. However, for example, when the operator of the key managing apparatus 310, the encryption apparatus 330, or the decryption apparatus 350 designates a password by, for example, inputting the password, it is unnecessary to provide the password generating unit 314.

In the second embodiment of the present invention, the password-management-information storage area 332 is provided in the encryption apparatus 330 and the password-management-information storage area 352 is provided in the decryption apparatus 350. However, when input of a user ID and a password by the user is received in encryption and decryption, it is unnecessary to provide these storage areas. When the user is urged to input a user ID and a password, it is desirable to prevent the input password from being displayed on a screen by, for example, replacing an input character string with alternative characters such as "*" for display.

In the decryption processing in the decryption apparatus 350 (Step S102 illustrated in FIG. 31), when the password corresponding to the user ID is not stored in the password-management-information storage area 352 provided in the storing unit 351 of the decryption apparatus 350, input of a password may be received from the user via the input unit 160.

The specification and drawings are, accordingly, to be regarded in an illustrative rather than a restrictive sense. It will, however, be evident that various modifications and changes may be made thereto without departing from the spirit and scope of the invention as set forth in the claims.

## Claims

1. An encryption apparatus which encrypts an electronic document, comprising:
a storing unit which stores at least one piece of management information for specifying a disclosee and cryptography information corresponding to the disclosee; and
a control unit,
wherein the control unit performs:
first selection processing of receiving a selection of electronic data included in the electronic document;
second selection processing of receiving, for each of the selected electronic data, at least one selection of the disclosee; and
processing of generating, using the cryptography information corresponding to the disclosee selected in the second selection processing, encryption area information including encrypted data obtained by encrypting the electronic data selected in the first selection processing, positional information for specifying a position of the electronic data selected in the first selection processing in the electronic document, and decryption information that can specify information used in decrypting the encrypted data.

2. An encryption apparatus according to claim 1, wherein:
the cryptography information is a public key of a public key cryptography technology; and
the encrypted data is obtained by encrypting, with the public key, the electronic data selected in the first selection processing.

3. An encryption apparatus according to claim 1, wherein:
the cryptography information is common secret information; and
the encrypted data is obtained by encrypting, with an encryption key generated from the common secret information, the electronic data selected in the first selection processing.

4. A decryption apparatus which decrypts encrypted data obtained by encrypting an electronic document associated with encryption area information including the encrypted data obtained by encrypting, positional information for specifying a position of the electronic data in the electronic document, and decryption information for specifying information used in decrypting the encrypted data, the decryption apparatus comprising a control unit which performs:
processing of acquiring the decryption information from the encryption area information;
processing of decrypting, with the decryption information, the encrypted data; and
processing of inserting the decrypted electronic data into the position specified by the positional information of the encryption area information.

5. A decryption apparatus according to claim 4, further comprising a storing unit, wherein:
the decryption information comprises information indicating a secret key of a public key cryptography technology stored in the storing unit; and
the processing of decrypting the encrypted data comprises processing of decrypting, with the secret key indicated by the decryption information, the encrypted data.

6. A decryption apparatus according to claim 4, wherein:
the decryption information comprises information indicating common secret information; and
the processing of decrypting the encrypted data comprises processing of decrypting, with a decryption key generated by using the common secret information indicated by the decryption information, the encrypted data.

7. A cryptography system, comprising:
an encryption apparatus which encrypts an electronic document; and
a decryption apparatus which decrypts the electronic document encrypted by the encryption apparatus, wherein:
the encryption apparatus includes:
a storing unit which stores at least one piece of management information for specifying a disclosee and cryptography information corresponding to the disclosee; and
a control unit; and the control unit of the encryption apparatus performs:
first selection processing of receiving a selection of electronic data included in the electronic document;
second selection processing of receiving, for each of the selected electronic data, at least one selection of the disclosee; and
processing of generating, using the cryptography information corresponding to the disclosee selected in the second selection processing, encryption area information including encrypted data obtained by encrypting the electronic data selected in the first selection processing, positional information for specifying a position of the electronic data selected in the first selection processing in the electronic document, and decryption information that can specify information used in decrypting the encrypted data.

8. A cryptography system according to claim 7, wherein:
the encryption information is a public key of a public key cryptography technology; and
the encrypted data is obtained by encrypting, with the public key, the electronic data selected in the first selection processing.

9. A cryptography system according to claim 7, wherein:
the encryption information is common secret information; and
the encrypted data is obtained by encrypting, with an encryption key generated from the common secret information, the electronic data selected in the first selection processing.

10. The invention of any of claims 1 to 3 and 7 to 9, wherein the control unit of the encryption apparatus deletes the electronic data selected in the first selection processing from the electronic document.

11. The invention of claim 10, wherein the control unit of the encryption apparatus inserts electronic data different from the deleted electronic data into a position in which the electronic data deleted from the electronic document has been existed.

12. The invention of any of claims 1 to 3 and 7 to 11, wherein the control unit of the encryption apparatus adds the encryption area information to a part of the electronic document.

13. A cryptography system according to claim 7, wherein the decryption apparatus includes a control unit which performs:
processing of acquiring the decryption information from the encryption area information;
processing of decrypting, with the decryption information, the encrypted data; and
processing of inserting the decrypted electronic data into the position specified by the positional information of the encryption area information.

14. A cryptography system according to claim 13, wherein:
the decryption apparatus comprises a storing unit;
the decryption information is information indicating a secret key of a public key cryptography technology stored in the storing unit of the decryption apparatus; and
the processing of decrypting the encrypted data comprises processing of decrypting, with the secret key indicated by the decryption information, the encrypted data.

15. A cryptography system according to claim 13, wherein:
the decryption information comprises information indicating common secret information; and
the processing of decrypting the encrypted data is processing of decrypting, with a decryption key generated by using the common secret information indicated by the decryption information, the encrypted data.
